# EUROPEAN PATENT APPLICATION

(11) **EP 4 597 605 A2**
(43) Date of publication of application: **06.08.2025**
(21) Application number: 25154185.0
(22) Date of filing: 27.01.2025
(51) Int. Cl.: H01M 4/13, H01M 4/62, H01M 10/0525, H01M 10/0567, H01M 4/02, H01M 4/136

(54) **ELECTROLYTE, LITHIUM-ION BATTERY, AND ELECTRICITY-CONSUMPTION DEVICE**

(30) Priority: 02.02.2024 CN 202410147167
(71) Applicant: Hithium Tech HK Limited, Hong Kong (HK)
(72) Inventor: ZHENG, Jianming, Shenzhen, 518110 (CN); CHEN, Yuyu, Shenzhen, 518110 (CN); YU, Tong, Shenzhen, 518110 (CN)
(74) Representative: Mewburn Ellis LLP

(57) **Abstract**

The disclosure relates to an electrolyte, a lithium ion battery, and an electricity-consumption device. The electrolyte includes a borate-based additive. A mass fraction *w*1 of the borate-based additive in the electrolyte satisfies 0.01% ≤ *w*1 ≤ 2%.

## Description

### TECHNICAL FIELD

The present disclosure relates to the field of lithium ion battery technology, and in particular, to an electrolyte, a lithium ion battery, and an electricity-consumption device.

### BACKGROUND

With the rapid development of the current new energy technologies, the demand for cycling life of the battery is becoming increasingly high. A small amount of lithium-rich lithium iron oxide (Li₅FeO₄, LFO for short) as a lithium supplement agent added to a positive electrode material can effectively compensate the consumption of active lithium during the cycling process, thereby improving the cycling performance of the battery.

### SUMMARY

In view of this, the disclosure provides an electrolyte, a lithium ion battery, and an electricity-consumption device. The electrolyte has good stability.

The disclosure provides an electrolyte. The electrolyte includes a borate-based additive, and a mass fraction *w*1 of the borate-based additive in the electrolyte satisfies 0.01% ≤ *w*1 ≤ 2%.

Further, the electrolyte further includes a sulfur-containing additive, where a mass fraction *w*2 of the sulfur-containing additive in the electrolyte satisfies 0.01% ≤ *w*2 ≤ 2%.

Further, in the electrolyte, a ratio of the mass fraction w2 of the sulfur-containing additive to the mass fraction *w*1 of the borate-based additive satisfies 0.5 ≤ *w*2/*w*1 ≤ 1.2.

Further, the borate-based additive is selected from a group consisting of lithium difluoro(oxalato)borate, lithium bis(oxalate)borate, lithium Tetrafluoroborate, lithium tetraborate, lithium tetracyanoborate, lithium difluoro(oxalato)borate, lithium tetrakis(trifluoromethyl)borate, lithium difluorobis(trifluoromethyl)borate, lithium dicyanooxlatoborate, lithium pentafluoroethyltrifluoroborate, lithium perfluoro-tert-butoxy trifluoroborate, and any combination thereof.

Further, the sulfur-containing additive is selected from a group consisting of 1,3-propanesultone, ethylene sulfate, 1,3-propenesultone, 1,4-butanesultone, 1,4-butenesultone, methylene methanedisulfonate, pentaerythritol bicyclic sulfate, and any combination thereof.

The disclosure further provides a battery. The battery includes a negative electrode, a separator, a positive electrode, and the electrolyte provided in the disclosure. The separator is disposed on one side of the negative electrode. The positive electrode is disposed on one side of the separator facing away from the negative electrode. The positive electrode includes a positive active layer and a positive current collector layer, the positive active layer is disposed on a surface of the positive current collector layer, and the positive active layer includes multiple lithium supplement particles. At least part of the positive electrode and at least part of the negative electrode are immersed in the electrolyte.

Further, a mass fraction of the lithium supplement particles in the positive active layer is w3. The lithium supplement particle includes a matrix and a coating layer, and the coating layer is disposed on an outer surface of the matrix. A plane shrinkage rate *α* of the matrix satisfies 0.4 ≤ α×*w*3/*w*1 ≤ 0.85. A chemical formula of the matrix is Li₁₊ᵣM₁₋ₚNₚO₄₋ₛBₛ, with r satisfying 0.1 < r < 6.1, p satisfying 0 ≤ p < 0.99, and s satisfying 0 ≤ s < 0.1. M and N each are selected from a group consisting of iron, cobalt, nickel, titanium, zinc, magnesium, aluminum, manganese, vanadium, chromium, zirconium, copper, niobium, tantalum, tungsten, yttrium, lanthanum, and any combination thereof, and B is selected from a group consisting of sulfur, nitrogen, fluorine, chlorine, bromine, and any combination thereof.

Further, an area defined by an inner contour of the coating layer in a cross-section of the positive electrode is *S*1, and after the lithium supplement particles release lithium ions, an area defined by an outer contour of the matrix is *S*2, where the plane shrinkage rate *α* of the matrix satisfies *α = (S*1*-S*2)/*S*1×100%, and the plane shrinkage rate *α* of the matrix satisfies 5% ≤ *α* ≤ 40%.

Further, the lithium ion battery satisfies 20 ≤ *α*/*w*1 ≤ 100.

Further, the mass fraction w3 of the lithium supplement particles in the positive active layer satisfies 0.5% ≤ *w*3 ≤ 5%.

Further, multiple lithium supplement particles are in a cross-section of the positive electrode under a 5K magnification and within a rectangular area of 22µm×15µm. A sum of areas defined by inner contours of a plurality of coating layers is *S*3, and after the lithium supplement particles release lithium ions, a sum of areas defined by outer contours of a plurality of matrices is *S*4, where a shrinkage area *S* of the multiple lithium supplement particles during a lithium supplement process satisfies *S* = *S*3-*S*4, and *S* satisfies 1.5µm² ≤ *S*/*w*1 ≤ 8µm².

Further, the shrinkage area S of the multiple lithium supplement particles during the lithium supplement process satisfies 0.1µm² ≤ *S* ≤ 6µm².

The disclosure further provides an electricity-consumption device. The electricity-consumption device includes a device body and the lithium ion battery provided in the disclosure. The lithium ion battery is configured to supply power to the device body.

In the disclosure, the electrolyte is applied to a lithium ion battery and a positive electrode of the lithium ion battery includes lithium supplement particles. During the initial charge-discharge cycle and the cycling process of the lithium ion battery, active lithium ions of the positive electrode are consumed continuously, which may lead to the loss of available energy of the lithium ion battery. However, in the disclosure, the positive electrode includes lithium supplement particles. During the charging process of the lithium ion battery, the lithium supplement particles release lithium ions to promptly replenish the consumed active ions in the electrolyte, so that the lithium ion battery has a high available energy. Moreover, the lithium supplement particles release iron ions and negative oxygen ions while releasing lithium ions. The electrolyte includes a borate-based additive, and boron atoms in the borate-based additive have electron deficient properties. The boron atoms are easily combined with negative oxygen ions, which may prevent iron ions from being combined with negative oxygen ions, thereby reducing the production of oxygen. In this way, it is beneficial for reducing the solubility of oxygen in the electrolyte and reducing side reactions between oxygen and the electrolyte, thereby improving the stability of the electrolyte and the interfacial stability between the positive electrode and the electrolyte, and improving the cycling performance and the safety performance of the lithium ion battery when the electrolyte is applied to the lithium ion battery.

Further, when the mass fraction *w*1 of the borate-based additive satisfies 0.01% ≤ *w*1 ≤ 2%, the mass fraction of the borate-based additive in the electrolyte is within a reasonable range. The borate-based additive has sufficient boron atoms that can be combined with negative oxygen ions, so as to reduce the amount of oxygen generated by oxidation reactions between negative oxygen ions and iron ions. In this way, side reactions between the electrolyte and oxygen may be further reduced, thereby improving the stability of the electrolyte and the interfacial stability between the positive electrode and the electrolyte, and improving the cycling performance and the safety performance of the lithium ion battery when the electrolyte is applied to the lithium ion battery. In addition, it can prevent the interfacial impedance of the electrolyte from increasing due to excessive borate-based additive in the electrolyte. When the mass fraction *w*1 of the borate-based additive is too large, that is, the mass content of the borate-based additive in the electrolyte is too large, excessive borate-based additive may adhere to the interface between the positive electrode and the electrolyte or the interface between the negative electrode and the electrolyte. In this case, reduction reactions occur and the generated decomposition products adhere to the positive electrode and/or the negative electrode, which may increase the interfacial impedance, thereby slowing down the transmission speed and migration speed of active ions between the positive electrode/negative electrode and the electrolyte, resulting in a low energy efficiency of the lithium ion battery when the electrolyte is applied to the lithium ion battery. When the mass fraction *w*1 of the borate-based additive is too small, that is, the mass content of the borate-based additive in the electrolyte is too small, boron atoms in the borate-based additive are insufficient when the electrolyte is applied to the lithium ion battery. In this case, boron atoms can only be combined with a small portion of negative oxygen ions. When the lithium ion battery is charged, oxidation reactions between iron ions and other negative oxygen ions released by the lithium supplement particles occur, and oxygen is generated, so that the solubility of oxygen in the electrolyte increases, thereby accelerating side reactions between oxygen and the electrolyte, and reducing the stability of the electrolyte. As a result, the cycling performance of the lithium ion battery is poor when the electrolyte is applied to the lithium ion battery.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a schematic cross-sectional structural view of a lithium ion battery provided in an embodiment of the disclosure.
FIG. 2 is a schematic cross-sectional structural view of a positive electrode provided in an embodiment of the disclosure.
FIG. 3 is a scanning electron microscope (SEM) image of a lithium supplement particle after shrinkage provided in an embodiment of the disclosure.
FIG. 4 is an SEM image of a lithium supplement particle after shrinkage provided in another embodiment of the disclosure.
FIG. 5 is a circuit diagram of an electricity-consumption device provided in an embodiment of the disclosure.
FIG. 6 is a schematic structural view of an electricity-consumption device provided in an embodiment of the disclosure.

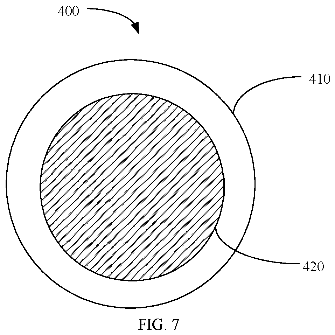

FIG. 7 is a schematic structural view of a lithium supplement particle provided in an embodiment of the disclosure.

### Description of reference signs:

100 - electrolyte, 200 - lithium ion battery, 210 - negative electrode, 220 - separator, 230 - positive electrode, 231 - positive active layer, 232 - positive current collector layer, 300 - electricity-consumption device, 310 - device body, 400 - lithium supplement particle, 410 - coating layer, 420 - matrix.

### DETAILED DESCRIPTION

The following will illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", and the like used in the specification, the claims, and the accompany drawings of the present disclosure are used to distinguish different objects rather than describe a particular order. In addition, the terms "include" and "comprise", as well as variations thereof are intended to cover non-exclusive inclusion. For example, a process, method, system, product, or apparatus including a series of steps or units is not limited to the listed steps or units. Instead, it can optionally include other steps or units that are not listed; alternatively, other steps or units inherent to the process, method, product, or device can be also included either.

The term "embodiment" or "implementation" referred to herein means that a particular feature, structure, or character described in conjunction with the embodiment or implementation may be contained in at least one embodiment of the present disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that embodiments described in the present disclosure may be combined with other embodiments.

With the rapid development of the current new energy technologies, the demand for cycling life of the battery is becoming increasingly high. A small amount of lithium iron oxide (Li₅FeO₄, LFO for short) as a lithium supplement agent added to a positive electrode material can effectively compensate the consumption of active lithium during the cycling process, thereby improving the cycling performance of the battery. However, for the lithium iron oxide, oxidation reactions between iron and oxygen occur during delithiation, making it easy to produce oxygen, which causes an electrolyte to be oxidized at a positive electrode. This not only consumes the electrolyte but also makes the electrolyte system unstable, thereby reducing the cycling life and the safety performance of the battery. When the lithium iron oxide releases a large amount of lithium ions during delithiation, the lithium iron oxide also releases a large amount of oxygen, causing more side reactions between the positive electrode material and the electrolyte, thereby reducing the safety performance of the battery. When the lithium iron oxide releases a small amount of lithium ions during delithiation, it is difficult for the lithium iron oxide to compensate the consumption of active lithium during the cycling process, thereby reducing the cycling performance of the battery.

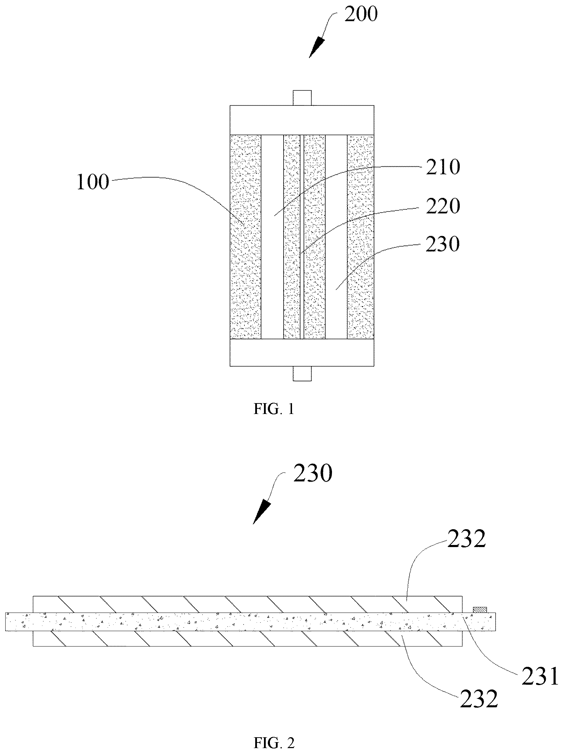

Reference is made to FIG. 1. Embodiments of the disclosure provide an electrolyte 100, and the electrolyte 100 includes a borate-based additive. A mass fraction *w*1 of the borate-based additive in the electrolyte 100 satisfies 0.01% ≤ *w*1 ≤ 2%.

Specifically, the mass fraction *w*1 of the borate-based additive may be, but is not limited to, 0.01%, 0.05%, 0.1%, 0.15%, 0.2%, 0.25%, 0.35%, 0.4%, 0.45%, 0.55%, 0.65%, 0.7%, 0.75%, 0.8%, 0.85%, 0.9%, 1.0%, 1.1%, 1.2%, 1.25%, 1.3%, 1.35%, 1.4%, 1.45%, 1.5%, 1.55%, 1.65%, 1.75%, 1.85%, 1.9%, 2%, etc.

It may be understood that, the mass fraction *w*1 of the borate-based additive is a ratio of the mass of the borate-based additive to the mass of the electrolyte 100.

It may be understood that, the electrolyte 100 is applied to a lithium ion battery 200. The lithium ion battery 200 further includes a negative electrode 210, a separator 220, and a positive electrode 230. The positive electrode 230 includes a positive active layer 231 and a positive current collector layer 232. The positive active layer 231 is disposed on a surface of the positive current collector layer 232, and the positive active layer 231 includes lithium supplement particles 400. At least part of the positive electrode 230 and at least part of the negative electrode 210 are immersed in the electrolyte 100. During the charge-discharge process of the lithium ion battery 200, the electrolyte 100 serves as a transport medium for active ions, that is, a transport medium for lithium ions. On one hand, the electrolyte 100 can provide some active lithium ions as conductive ions for use. On the other hand, the electrolyte 100 can provide ion channels to help lithium ions move freely in the lithium ion battery 200. The lithium supplement particles 400 release lithium ions when the lithium ion battery 200 is charged, so as to timely replenish the active ions consumed in the electrolyte 100.

It may be understood that, the borate-based additive includes boron. The nucleus of boron is composed of 5 protons and 6 neutrons, and the electron configuration of boron is 1s²2s²2p¹, where the 2s orbital is occupied by two electrons and the 2p orbital is occupied by one electrons. There is one electron missing in the electron configuration of boron, so that the boron atom has a characteristic of electron deficiency.

In the embodiment, the electrolyte 100 is applied to a lithium ion battery 200 and a positive electrode 230 of the lithium ion battery 200 includes lithium supplement particles 400. During the initial charge-discharge cycle and the cycling process of the lithium ion battery 200, active lithium ions of the positive electrode 230 are consumed continuously, which may lead to the loss of available energy of the lithium ion battery 200. However, in the disclosure, the positive electrode 230 includes lithium supplement particles 400. During the charging process of the lithium ion battery 200, the lithium supplement particles 400 release lithium ions to promptly replenish the consumed active ions in the electrolyte 100, so that the lithium ion battery 200 has a high available energy. Moreover, the lithium supplement particles 400 release iron ions and negative oxygen ions while releasing lithium ions. The electrolyte 100 includes a borate-based additive, and boron atoms in the borate-based additive have electron deficient properties. The boron atoms are easily combined with negative oxygen ions, which may prevent iron ions from combining with negative oxygen ions, thereby reducing the production of oxygen. In this way, it is beneficial for reducing the solubility of oxygen in the electrolyte 100 and reducing side reactions between oxygen and the electrolyte 100, thereby improving the stability of the electrolyte 100 and the interfacial stability between the positive electrode 230 and the electrolyte 100, and improving the cycling performance and the safety performance of the lithium ion battery 200 when the electrolyte 100 is applied to the lithium ion battery 200.

Further, when the mass fraction *w*1 of the borate-based additive satisfies 0.01% ≤ *w*1 ≤ 2%, the mass fraction of the borate-based additive in the electrolyte 100 is within a reasonable range. The borate-based additive has sufficient boron atoms that can be combined with negative oxygen ions, so as to reduce the amount of oxygen generated by oxidation reactions between negative oxygen ions and iron ions. In this way, side reactions between the electrolyte 100 and oxygen may be further reduced, thereby improving the stability of the electrolyte 100 and the interfacial stability between the positive electrode 230 and the electrolyte 100, and improving the cycling performance and the safety performance of the battery when the electrolyte 100 is applied to the battery. In addition, it can prevent the interfacial impedance between the negative electrode 210 and/or the positive electrode 230 and the electrolyte 100 from increasing due to excessive borate-based additive in the electrolyte 100. When the mass fraction *w*1 of the borate-based additive is too large, that is, the mass content of the borate-based additive in the electrolyte 100 is too large, excessive borate-based additive may adhere to the interface between the positive electrode 230 and the electrolyte 100 or the interface between the negative electrode 210 and the electrolyte 100. In this case, reduction reactions occur and the generated decomposition products adhere to the positive electrode 230 and/or the negative electrode 210, which may increase the interfacial impedance, thereby slowing down the transmission speed and migration speed of active ions between the positive electrode 230/the negative electrode 210 and the electrolyte 100, resulting in a low energy efficiency of the lithium ion battery 200 when the electrolyte 100 is applied to the lithium ion battery 200. When the mass fraction *w*1 of the borate-based additive is too small, that is, the mass content of the borate-based additive in the electrolyte 100 is too small, boron atoms are insufficient in the borate-based additive when the electrolyte 100 is applied to the lithium ion battery 200. In this case, boron atoms can only be combined with a small portion of negative oxygen ions. When the lithium ion battery 200 is charged, oxidation reactions between iron ions and other negative oxygen ions released by the lithium supplement particles 400 occur, and oxygen is generated, so that the solubility of oxygen in the electrolyte 100 increases, thereby accelerating side reactions between oxygen and the electrolyte 100, and reducing the stability of the electrolyte 100. As a result, the cycling performance of the lithium ion battery 200 is poor when the electrolyte 100 is applied to the lithium ion battery 200.

Preferably, the mass fraction *w*1 of the borate-based additive satisfies 0.3% ≤ *w*1 ≤ 1.4%. specifically, the mass fraction *w*1 of the borate-based additive may be, but is not limited to, 0.3%, 0.35%, 0.4%, 0.45%, 0.5%, 0.55%, 0.65%, 0.7%, 0.75%, 0.8%, 0.85%, 0.9%, 1.0%, 1.1%, 1.2%, 1.25%, 1.3%, 1.35%, 1.4%, etc.

In the embodiment, when the mass fraction *w*1 of the borate-based additive satisfies 0.3% ≤ *w*1 ≤ 1.4%, the electrolyte 100 can not only be combined with the negative oxygen ions released by the lithium supplement particles 400 to slow down the production of oxygen, but also prevent the interfacial impedance between the negative electrode 210 and/or the positive electrode 230 and the electrolyte 100 from increasing due to excessive borate-based additive in the electrolyte 100. When the electrolyte 100 is applied to the battery, the lithium ion battery 200 has a high cycling performance and a high safety performance.

Optionally, the borate-based additive includes lithium ions.

In the embodiment, the borate-based additive includes lithium ions. When the electrolyte 100 includes the borate-based additive and the electrolyte 100 is applied to the lithium ion battery 200, the borate-based additive may serve as a lithium supplement agent for the electrolyte 100. The borate-based additive can release lithium ions to replenish the lithium ions consumed in the electrolyte 100, which is beneficial for improving the cycling performance of the battery when the electrolyte 100 is applied to the battery.

Optionally, the borate-based additive includes at least one of lithium difluoro(oxalato)borate, lithium bis(oxalate)borate, lithium tetrafluoroborate, lithium tetraborate, lithium tetracyanoborate, lithium difluoro(oxalato)borate, lithium tetrakis(trifluoromethyl)borate, lithium difluorobis(trifluoromethyl)borate, lithium dicyanooxlatoborate, lithium pentafluoroethyltrifluoroborate, or lithium perfluoro-tert-butoxy trifluoroborate.

It may be understood that, in the disclosure, the term "at least one" may refer to greater than or equal to one, and "at least one" may be one, two, three, four, etc.

In the embodiment, lithium difluoro(oxalato)borate, lithium bis(oxalate)borate, lithium tetrafluoroborate, lithium tetraborate, lithium tetracyanoborate, lithium difluoro(oxalato)borate, lithium tetrakis(trifluoromethyl)borate, lithium difluorobis(trifluoromethyl)borate, lithium dicyanooxlatoborate, lithium pentafluoroethyltrifluoroborate, and lithium perfluoro-tert-butoxy trifluoroborate all include boron atoms. When the electrolyte 100 includes the borate-based additive, boron atoms in the borate-based additive can be combined with negative oxygen ions, so as to reduce the amount of oxygen generated by oxidation reactions between negative oxygen ions and iron ions. In this way, side reactions between the electrolyte 100 and oxygen may be further reduced, thereby improving the stability of the electrolyte 100 and the interfacial stability between the positive electrode 230 and the electrolyte 100, and improving the cycling performance and the safety performance of the battery when the electrolyte 100 is applied to the battery. In addition, cations of lithium difluoro(oxalato)borate, lithium bis(oxalate)borate, lithium tetrafluoroborate, lithium tetraborate, lithium tetracyanoborate, lithium difluoro(oxalato)borate, lithium tetrakis(trifluoromethyl)borate, lithium difluorobis(trifluoromethyl)borate, lithium dicyanooxlatoborate, lithium pentafluoroethyltrifluoroborate, and lithium perfluoro-tert-butoxy trifluoroborate are lithium ions. In this case, when the electrolyte 100 includes the borate-based additive and the electrolyte 100 is applied to the lithium ion battery 200, on one hand, it may avoid excessive impurities in the electrolyte 100 caused by introducing other cations into the electrolyte 100. It is beneficial for reducing side reactions between the positive electrode 230/the negative electrode 210 and the electrolyte 100, and improving the stability of the electrolyte 100. On the other hand, the borate-based additive may serve as a lithium supplement agent for the electrolyte 100. The borate-based additive can release lithium ions to replenish the lithium ions consumed in the electrolyte 100, which is beneficial for improving the cycling performance of the battery when the electrolyte 100 is applied to the battery.

In some embodiments, the electrolyte 100 further includes a sulfur-containing additive. A mass fraction w2 of the sulfur-containing additive in the electrolyte 100 satisfies 0.01% ≤ *w*2 ≤ 2%.

It may be understood that, the mass fraction of the sulfur-containing additive is a ratio of the mass of the sulfur-containing additive to the mass of the electrolyte 100.

Specifically, the mass fraction w2 of the sulfur-containing additive may be, but is not limited to, 0.01%, 0.05%, 0.1%, 0.15%, 0.2%, 0.25%, 0.3%, 0.38%, 0.4%, 0.45%, 0.5%, 0.6%, 0.7%, 0.8%, 0.9%, 1.0%, 1.1%, 1.2%, 1.3%, 1.35%, 1.4%, 1.45%, 1.5%, 1.55%, 1.6%, 1.64%, 1.7%, 1.75%, 1.8%, 1.85%, 1.9%, 2%, etc.

In the embodiment, the electrolyte 100 further includes the sulfur-containing additive. When the electrolyte 100 is applied to the lithium ion battery 200, a sulfur-containing interfacial film is formed between the negative electrode 210 and/or the positive electrode 230 and the electrolyte 100 during the initial charge-discharge cycle and the cycling process of the lithium ion battery 200. Active ions in the electrolyte 100 has a high transmission speed through the sulfur-containing interfacial film. In other words, the sulfur-containing interfacial film has a good ionic conductivity, which may reduce the interfacial impedance between the negative electrode 210 and/or the positive electrode 230 and the electrolyte 100, thereby improving the energy efficiency of the lithium ion battery 200 when the electrolyte 100 is applied to the lithium ion battery 200. When the mass fraction *w*2 of the sulfur-containing additive satisfies 0.01% ≤ *w*2 ≤ 2%, the mass content of the sulfur-containing additive in the electrolyte 100 is within a reasonable range, and then the amount of sulfur in the interfacial film between the negative electrode 210 and/or the positive electrode 230 and the electrolyte 100 is within a reasonable range, which may effectively improve the ionic conductivity of the sulfur-containing additive. In this way, the increase of the interfacial impedance caused by the addition of the borate-based additive may be offset, so that the active ions may have a high transmission speed and a high migration speed between the positive electrode 230/the negative electrode 210 and the electrolyte 100, thereby improving the energy efficiency of the lithium ion battery 200 when the electrolyte 100 is applied to the lithium ion battery 200. Furthermore, decomposition of the sulfur-containing additive in the electrolyte 100 due to excessive mass fraction of the sulfur-containing additive may be avoided, which is beneficial for improving the safety performance of the battery when the electrolyte 100 is applied to the battery. When the mass fraction w2 of the sulfur-containing additive is too large, the sulfur-containing additive in the electrolyte 100 may be easily hydrolyzed in the electrolyte 100 and produce acids, thus damaging the interfacial film between the positive electrode 230/the negative electrode 210 and the electrolyte 100. In the process of continuously repairing the interfacial film by the lithium ions, active lithium ions will be consumed irreversibly, which will lead to the continuous capacity attenuation of the lithium ion battery 200, thereby reducing the capacity retention rate, the cycling performance, and the safety performance of the lithium ion battery 200 when the electrolyte 100 is applied to the lithium ion battery 200. When the mass fraction w2 of the sulfur-containing additive is too small, the amount of sulfur in the interfacial film between the negative electrode 210 and/or the positive electrode 230 and the electrolyte 100 is insufficient, resulting in limited improvement on the ionic conductivity of the interfacial film by the sulfur-containing additive. In other words, it is difficult for the sulfur-containing additive to offset the increase of the interfacial impedance between the negative electrode 210 and/or the positive electrode 230 and the electrolyte 100 caused by the addition of the borate-based additive, so that the active ions have a low transmission speed and a low migration speed between the positive electrode 230/the negative electrode 210 and the electrolyte 100, resulting in a low energy efficiency of the lithium ion battery 200 when the electrolyte 100 is applied to the lithium ion battery 200.

Preferably, the mass fraction *w*2 of the sulfur-containing additive satisfies 0.5% ≤ *w*2 ≤ 1.5%. Specifically, the mass fraction *w*2 of the sulfur-containing additive may be, but is not limited to, 0.5%, 0.6%, 0.7%, 0.8%, 0.9%, 1%, 1.1%, 1.2%, 1.3%, 1.35%, 1.4%, 1.45%, 1.5%, etc.

In the embodiment, when the mass fraction *w*2 of the sulfur-containing additive satisfies 0.5% ≤ *w*2 ≤ 1.5%, the amount of sulfur in the interfacial film between the negative electrode 210 and/or the positive electrode 230 and the electrolyte 100 is within a preferable range, which may effectively improve the ionic conductivity of the sulfur-containing additive. In this way, the increase of the interfacial impedance caused by the addition of the borate-based additive may be offset, so that the active ions may have a high transmission speed and a high migration speed between the positive electrode 230/the negative electrode 210 and the electrolyte 100, thereby improving the energy efficiency of the lithium ion battery 200 when the electrolyte 100 is applied to the lithium ion battery 200. Furthermore, decomposition of the sulfur-containing additive in the electrolyte 100 due to excessive mass fraction of the sulfur-containing additive may be avoided, which is beneficial for improving the safety performance of the battery when the electrolyte 100 is applied to the battery.

In some embodiments, a ratio of the mass fraction *w*2 of the sulfur-containing additive to the mass fraction *w*1 of the borate-based additive satisfies: 0.5 ≤ *w*2/*w*1 ≤ 1.2.

Specifically, the value of *w*2/*w*1 may be, but is not limited to, 0.5, 0.55, 0.6, 0.65, 0.7, 0.75, 0.8, 0.85, 0.9, 0.95, 1.0, 1.05, 1.1, 1.15, 1.2, etc.

In the embodiment, when the ratio of the mass fraction *w*2 of the sulfur-containing additive to the mass fraction *w*1 of the borate-based additive satisfies 0.5 ≤ *w*2/*w*1 ≤ 1.2, the mass fraction of the borate-based additive and the mass fraction of the sulfur-containing additive are each within a reasonable range. On one hand, the borate-based additive has sufficient boron atoms that can be combined with negative oxygen ions, and the sulfur-containing additive can offset the increase of the interfacial impedance caused by the addition of the borate-based additive. In the lithium ion battery 200, the lithium supplement particles 400 can promptly replenish lithium ions for the electrolyte 100, the borate-based additive can promptly suppress the formation of oxygen, and the sulfur-containing additive can promptly offset the increase of the interfacial impedance caused by the borate-based additive. The lithium supplement particles 400, the borate-based additive, and the sulfur-containing additive cooperate with one another, thereby achieving a high stability of the electrolyte 100, and improving the cycling performance and the safety performance of the lithium ion battery 200 when the electrolyte 100 is applied to the lithium ion battery 200. When the value of *w*2/*w*1 is too large, the mass fraction *w*2 of the sulfur-containing additive in the electrolyte 100 is far greater than the mass fraction of the borate-based additive. Although the sulfur-containing additive can offset the increase of the interfacial impedance caused by the addition of the borate-based additive, the excessive amount of the sulfur-containing additive may result in that the sulfur-containing additive is easily hydrolyzed in the electrolyte 100 and produce acids, thus damaging the interfacial film between the positive electrode 230/the negative electrode 210 and the electrolyte 100. In this case, the cycling performance and the safety performance of the lithium ion battery 200 when the electrolyte 100 is applied to the lithium ion battery 200 may be reduced. In addition, if the content of the borate-based additive is insufficient, in the lithium ion battery 200, the boron atoms of the borate-based additive can only be combined with a small portion of negative oxygen ions. In this case, oxidation reactions between iron ions and most of the negative oxygen ions released by the lithium supplement particles 400 occur, and oxygen is generated, thereby accelerating side reactions between oxygen and the electrolyte 100, and reducing the stability of the electrolyte 100. As a result, the cycling performance of the lithium ion battery 200 is reduced when the electrolyte 100 is applied to the lithium ion battery 200. When the value of *w*2/*w*1 is too small, the mass fraction of the borate-based additive in the electrolyte 100 is far greater than the mass fraction w2 of the sulfur-containing additive. In other words, it is difficult for the sulfur-containing additive to offset the increase of the interfacial impedance caused by the addition of the borate-based additive. Excessive borate-based additive may adhere to the interface between the positive electrode 230 and/or the negative electrode 210 and the electrolyte 100, so that the interfacial impedance is increased, thereby slowing down the transmission speed and migration speed of active ions between the positive electrode 230/the negative electrode 210 and the electrolyte 100, resulting in a low energy efficiency of the lithium ion battery 200 when the electrolyte 100 is applied to the lithium ion battery 200.

Optionally, the sulfur-containing additive includes at least one of 1,3-propanesultone, ethylene sulfate, 1,3-propenesultone, 1,4-butanesultone, 1,4-butenesultone, methylene methanedisulfonate, or pentaerythritol bicyclic sulfate.

In the embodiment, 1,3-propanesultone, ethylene sulfate, 1,3-propenesultone, 1,4-butanesultone, 1,4-butenesultone, methylene methanedisulfonate, or pentaerythritol bicyclic sulfate all include boron atoms. When the sulfur-containing additive is applied to the electrolyte 100 and during the initial charge-discharge cycle and the cycling process of the lithium ion battery 200, the sulfur-containing additive releases sulfur ions, and a sulfur-containing interfacial film is formed between the negative electrode 210 and/or the positive electrode 230 and the electrolyte 100. Active ions in the electrolyte 100 has a high transmission speed through the sulfur-containing interfacial film. In other words, the sulfur-containing interfacial film has a good ionic conductivity, which may reduce the interfacial impedance between the negative electrode 210 and/or the positive electrode 230 and the electrolyte 100, thereby improving the energy efficiency of the lithium ion battery 200 when the electrolyte 100 is applied to the lithium ion battery 200.

Optionally, the electrolyte 100 further includes a solvent and a lithium salt. The solvent is used to dissolve the lithium salt and the borate-based additive, where the lithium salt includes active ions, namely lithium ions.

Optionally, the solvent includes at least one of ethylene carbonate, propylene carbonate, diethyl carbonate, ethyl methyl carbonate, dimethyl carbonate, ethyl acetate, ethyl propionate, propyl propionate, 1,1,2,2-tetrafluoroethyl-2,2,3,3-tetrafluoropropylether, or 1,2-dimethoxyethane.

Optionally, in some embodiments, a mass fraction *w*4 of the solvent in the electrolyte 100 satisfies 75% ≤ *w*4 ≤ 84%. Specifically, the value of the mass fraction w4 of the solvent may be, but is not limited to, 75%, 75.5%, 76%, 76.5%, 77%, 77.5%, 78%, 78.5%, 79%, 79.5%, 80%, 81%, 81.5%, 82%, 83%, 84%, etc.

Optionally, the lithium salt includes at least one of lithium hexafluorophosphate, lithium bis(fluorosulfonyl)imide, lithium difluorophosphate, lithium trifluoromethylsulfonylimide, lithium trifluoromethanesulfonate, or lithium perchlorate.

Optionally, in some embodiments, a mass fraction *w*5 of the lithium salt in the electrolyte 100 satisfies 10% ≤ *w*5 ≤ 15%. Specifically, the value of the mass fraction *w*5 of the lithium salt may be, but is not limited to, 10%, 10.5%, 11%, 11.5%, 11.8%, 12%, 12.5%, 13%, 13.5%, 14%, 14.2%, 14.5%, 15%, etc.

Optionally, the electrolyte 100 further includes a film-forming additive. When the electrolyte 100 is applied to the lithium ion battery 200, the film-forming additive facilitates the formation of the interfacial film of the positive electrode 230 and/or the negative electrode 210, and maintains the stability of the interfacial film.

Optionally, the film-forming additive includes at least one of fluoroethylene carbonate, vinylene carbonate, tris(trimethylsilyl) phosphate, tris(trimethylsilyl) borate, adiponitrile, succinonitrile, or 1,3,6-hexanetricarbonitrile.

Optionally, a mass fraction *w*6 of the film-forming additive satisfies 1.5% ≤ *w*6 ≤ 3%. Specifically, the value of the mass fraction w6 of the film-forming additive may be, but is not limited to, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, etc.

Reference is made to FIG. 2, embodiments of the disclosure provide a lithium ion battery 200, and the lithium ion battery 200 includes a negative electrode 210, a separator 220, a positive electrode 230, and the electrolyte 100 provided in the disclosure. The separator 220 is disposed on one side of the negative electrode 210. The positive electrode 230 is disposed on one side of the separator 220 facing away from the negative electrode 210, where the positive electrode 230 includes a positive active layer 231 and a positive current collector layer 232. The positive active layer 231 is disposed on a surface of the positive current collector layer 232, and the positive active layer 231 includes multiple lithium supplement particles 400. At least part of the positive electrode 230 and at least part of the negative electrode 210 are immersed in the electrolyte 100.

It may be understood that, the negative electrode 210, the separator 220, and the positive electrode 230 are sequentially disposed.

It may be understood that, in the lithium ion battery 200, the electrolyte 100 includes a lithium salt. The electrolyte 100 includes active ions, namely lithium ions. At least part of the positive electrode 230 and at least part of the negative electrode 210 are immersed in the electrolyte 100. During the charge-discharge process of the lithium ion battery 200, the electrolyte 100 serves as a transport medium for active ions, that is, a transport medium for lithium ions. On one hand, the electrolyte 100 can provide some active lithium ions as conductive ions for use. On the other hand, the electrolyte 100 can provide ion channels to help lithium ions move freely in the lithium ion battery 200.

In the lithium ion battery 200 provided in the embodiment, the positive active layer 231 of the positive electrode 230 includes lithium supplement particles 400. When the positive electrode 230 is applied to the lithium ion battery 200 and the lithium ion battery 200 is charged, the lithium supplement particles 400 release lithium ions. The lithium ions are transported from the positive electrode 230 to the electrolyte 100, and then are transported to the negative electrode 210 to replenish the lithium ions in the lithium ion battery 200, thereby improving the initial efficiency, the energy density, and the capacity retention rate of the lithium ion battery 200. Moreover, the lithium ion battery 200 includes the electrolyte 100 provided in the disclosure, and at least part of the positive electrode 230 and at least part of the negative electrode 210 are immersed in the electrolyte 100. The electrolyte 100 includes a borate-based additive, and boron atoms in the borate-based additive have electron deficient properties. The boron atoms are easily combined with negative oxygen ions, which may prevent iron ions from combining with negative oxygen ions, thereby reducing the production of oxygen. In this way, it is beneficial for reducing the solubility of oxygen in the electrolyte 100 and reducing side reactions between oxygen and the electrolyte 100, thereby improving the stability of the electrolyte 100 and the interfacial stability between the positive electrode 230 and the electrolyte 100, so that the lithium ion battery 200 has a high cycling performance and a high safety performance. In some embodiments, the electrolyte 100 further includes a sulfur-containing additive. During the initial charge-discharge cycle and the cycling process of the lithium ion battery 200, a sulfur-containing interfacial film is formed between the negative electrode 210 and/or the positive electrode 230 and the electrolyte 100, which improves the transmission speed of active ions through the sulfur-containing interfacial film. In this way, excessive interfacial impedance caused by the addition of the borate-based additive may be offset, so that the lithium ion battery 200 has a high energy efficiency.

Optionally, the lithium ion battery 200 may be one of a cylindrical battery, a prismatic battery, or a pouch battery.

Optionally, the material of the separator 220 is selected from at least one of fiberglass, nonwoven fabric, polyethylene, polypropylene, and polyvinylidene difluoride. In some embodiments, the separator 220 is a single-layer film. In other embodiments, the separator 220 is a multi-layer composite film. When the separator 220 is a multi-layer composite film, the materials of each layer may be the same or different.

Optionally, the thickness of the separator 220 ranges from 14µm to 18µm. Specifically, the thickness of the separator 220 may be, but is not limited to, 14µm, 14.5µm, 15µm, 15.5µm, 16µm, 16.5µm, 17µm, 17.5µm, 18µm, etc.

Optionally, the positive active layer 231 further includes a positive active material, and the positive active material is selected from at least one of a lithium transition metal oxide and modified materials thereof. In some embodiments, the positive active material is lithium iron phosphate. The modified materials may be obtained by performing doping modification and/or coating modification on the lithium transition metal oxide. Preferably, the lithium transition metal oxide may be, but is not limited to, lithium cobalt oxide, lithium nickel oxide, lithium manganese oxide, lithium nickel manganese oxide, lithium nickel cobalt manganese oxide, and lithium nickel cobalt aluminum oxide.

Optionally, the material of the positive current collector layer 232 is aluminum.

Optionally, the positive active layer 231 further includes a positive binder and a positive conductive agent. In the positive active layer 231, the positive binder is used to bond the components of the positive active layer 231 to enhance the overall performance of the positive electrode 230. The positive conductive agent can improve the conductivity of the positive active layer 231.

Optionally, the positive binder is selected from at least one of polyvinylidene fluoride, polyvinylidene difluoride, polytetrafluoroethylene, etc.

Optionally, the positive conductive agent is selected from at least one of graphite, superconducting carbon, acetylene black, carbon black, Ketjen black, carbon dots, carbon nanotubes, graphene, carbon nanofibers, etc.

Optionally, the negative electrode 210 includes a negative current collector layer (not illustrated in the drawings) and a negative active layer (not illustrated in the drawings). The negative active layer is disposed on the surface of the negative current collector layer, and the negative active layer includes a negative active material. The negative active material is selected from at least one of lithium metal, artificial graphite, natural graphite, graphene, and other composite materials.

Optionally, the negative current collector layer is copper.

Optionally, the negative active layer further includes a negative binder, a negative conductive agent, and a negative thickening agent. The negative binder is used to bond the components of the negative active layer to improve the overall performance of the negative active layer. The negative conductive agent is used to enhance the conductivity of the negative active layer. The thickening agent is used to improve the adhesion of the negative active layer.

Optionally, the negative conductive agent is selected from at least one of acetylene black, conductive carbon black, carbon nanotubes, carbon fibers, graphene, etc.

Optionally, the negative binder includes at least one of asphalt binder, styrene-butadiene rubber (SBR), polyvinylidene fluoride (PVDF), polytetrafluoroethylene (PTFE), polyvinyl alcohol (PVA), polyacrylonitrile (PAN), polyacrylic acid (PAA), polyacrylate, carboxymethyl cellulose (CMC), sodium alginate, etc.

Optionally, the negative thickening agent is selected from at least one of carboxymethyl cellulose sodium (CMC), polyacrylamide (PAM), polymethyl methacrylate (PMA), etc.

Optionally, in some embodiments, the lithium supplement particle 400 includes a matrix 420 and a coating layer 410, the coating layer 410 is disposed on an outer surface of the matrix 420. The chemical formula of the matrix 420 is Li₁₊ᵣM₁₋ₚNₚO₄₋ₛBₛ, with r satisfying 0.1 < r < 6.1, p satisfying 0 ≤ p < 0.99, and s satisfying 0 ≤ s < 0.1. M and N each are selected from a group consisting of iron, cobalt, nickel, titanium, zinc, magnesium, aluminum, manganese, vanadium, chromium, zirconium, copper, niobium, tantalum, tungsten, yttrium, lanthanum, and any combination thereof, and B is selected from a group consisting of sulfur, nitrogen, fluorine, chlorine, bromine, and any combination thereof.

It may be understood that, if a chemical formula of a matrix 420 is Li₁₊ᵣM₁₋ₚNₚO₄₋ₛBₛ, then the matrix 420 is formed by Li₁₊ᵣM₁₋ₚNₚO₄₋ₛBₛ.

In the embodiment of the disclosure, the lithium supplement particle 400 includes a matrix 420 and a coating layer 410, and the coating layer 410 is disposed on an outer surface of the matrix 420. On one hand, the coating layer 410 covers and protects the matrix 420, thereby preventing the matrix 420 from reacting with the air and being oxidized, and ensuring that the lithium supplement particles 400 can replenish lithium when the lithium ion battery 200 is charged, which is beneficial for improving the performance of the lithium supplement particles 400. On the other hand, the coating layer 410 has conductive properties. When the active ions in the matrix 420 are deintercalated, the active ions may enter the electrolyte 100 through the coating layer 410, and the coating layer 410 can reduce the impedance when the active ions are deintercalated from the lithium supplement particles 400, which is beneficial for improving the rate performance of the lithium ion battery 200 when the positive electrode 230 is applied to the lithium ion battery 200. In the embodiment, the chemical formula of the matrix 420 is Li₁₊ᵣM₁₋ₚNₚO₄₋ₛBₛ, and thus the matrix 420 has a simple elemental composition, with low material cost and simple synthesis process, which is beneficial for simplifying the preparation process of the positive electrode 230 and saving the preparation cost of the positive electrode 230. Moreover, the matrix 420 has a high lithium content. When the positive electrode 230 is applied to the lithium ion battery 200 and the lithium ion battery 200 is charged, the matrix 420 can release a large amount of lithium ions in time, so as to promptly replenish the lithium ions lost during charge-discharge cycles of the lithium ion battery 200, thereby improving the initial efficiency and the energy density of the lithium ion battery 200.

Specifically, the value of r may be, but is not limited to, 0.2, 0.4, 0.7, 0.9, 1.0, 1.3, 1.5, 1.7, 2.2, 2.5, 2.8, 3.2, 3.5, 3.7, 4.5, 4.8, 4.9, 5.1, 5.3, 5.5, 5.6, 5.8, 5.9, 6.0, etc.

Specifically, the value of p may be, but is not limited to, 0, 0.05, 0.09, 0.1, 0.15, 0.18, 0.22, 0.25, 0.28, 0.35, 0.39, 0.45, 0.48, 0.55, 0.59, 0.6, 0.65, 0.68, 0.7, 0.75, 0.79, 0.85, 0.88, 0.9, 0.94, 0.98, etc.

Specifically, the value of s may be, but is not limited to, 0, 0.01, 0.02, 0.03, 0.04, 0.05, 0.06, 0.07, 0.08, 0.09, etc.

Optionally, in some embodiments, the matrix 420 is lithium iron oxide, and the chemical formula of the matrix 420 is Li₅FeO₄. Optionally, in some other embodiments, the chemical formula of the matrix 420 is Li₆CoO₄.

Optionally, in some embodiments, the coating layer 410 is a carbon coating layer 410. The coating layer 410 has conductivity and can protect the matrix 420 that is wrapped by the coating layer 410, so as to enhance the antioxidant performance of the lithium supplement particles 400.

Optionally, in some other embodiments, the chemical formula of the coating layer 410 is ZₓO_{y}@C, where Z is selected from a group consisting of iron, cobalt, nickel, titanium, zinc, magnesium, aluminum, manganese, vanadium, chromium, zirconium, copper, niobium, tantalum, tungsten, yttrium, and lanthanum, and any combination thereof. The type of Z is the same as the type of M in the matrix 420. The coating layer 410 also satisfies 1 ≤ x ≤ 3, 1 ≤ y ≤ 5.

It may be understood that, the chemical formula of the lithium supplement particles 400 is Li₁₊ᵣM₁₋ₚNₚO₄₋ₛBₛ@ZₓO_{y}@C. The lithium supplement particle 400 is composed of Li₁₊ᵣM₁₋ₚNₚO₄₋ₛBₛ, ZₓO_{y}, and carbon. The lithium supplement particle 400 has Li₁₊ᵣM₁₋ₚNₚO₄₋ₛBₛ as the core and ZₓO_{y} is wrapped around the outer surface of the core, where ZₓO_{y} is an oxide layer that can prevent the core from being oxidized and corroded by the outside environment. Carbon is wrapped around the outer surface of the oxide layer to form a carbon layer, which is used to enhance the conductivity of the coating layer 410. In other words, the coating layer 410 includes the oxide layer and the carbon layer that are sequentially disposed, where the oxide layer is disposed between the carbon layer and the matrix 420.

Specifically, the value of x may be, but is not limited to, 1, 1.2, 1.3, 1.5, 1.7, 1.8, 1.9, 2.0, 2.1, 2.2, 2.4, 2.6, 2.7, 2.8, 2.9, 3, etc.

Specifically, the value of y may be, but is not limited to, 1, 1.2, 1.4, 1.5, 1.6, 1.8, 2.0, 2.2, 2.4, 2.5, 2.7, 2.8, 2.9, 3.0, 3.2, 3.4, 3.6, 3.8, 4.0, 4.1, 4.3, 4.5, 4.6, 4.7, 4.9, 5, etc.

In the embodiment, the chemical formula of the coating layer 410 is ZₓO_{y}@C. The coating layer 410 is composed of an oxide layer and a carbon layer, and the oxide layer is disposed closer to the matrix 420 than the carbon layer. The oxide layer can protect the matrix 420 from being oxidized by oxygen in the air, ensuring that the matrix 420 releases lithium ions for lithium supplement of the lithium ion battery 200. In addition, the type of Z is the same as the type of M in the matrix 420, which can avoid introducing too many heteroatoms and thus improve the uniformity of the lithium supplement particles 400. Furthermore, the coating layer 410 also includes carbon, and the carbon is wrapped around the outer surface of the oxide layer to form a carbon layer, which is beneficial for improving the conductivity of the lithium supplement particles 400 and reducing the impedance of active ions entering the electrolyte 100 from the matrix 420 and the coating layer 410, and thus improving the energy efficiency of the lithium ion battery 200.

Optionally, an area defined by an inner contour of the coating layer 410 in a cross-section of the positive electrode 230 is *S*1, and after the lithium supplement particles 400 release lithium ions, an area defined by an outer contour of the matrix 420 is S2, where the plane shrinkage rate *α* of the matrix 420 satisfies *α =* (*S*1-*S*2)/*S*1×100%.

It may be understood that, the cross-section of the positive electrode 230 is obtained by cutting the positive electrode 230 with an ion-beam cross-section polisher (CP). The positive electrode 230 is cut along the thickness direction (a direction from the positive active layer 231 to the positive current collector layer 232) of the positive electrode 230.

In the embodiment, when the lithium supplement particles 400 release lithium ions, the matrix 420 shrinks due to a decrease in lithium content, while the shape of the coating layer 410 remains the same. Therefore, in the embodiment, the area *S*1 defined by the inner contour of the coating layer 410 is an area of the matrix 420 before the shrinkage of the matrix 420, and the area S2 defined by the outer contour of the matrix 420 is an area of the matrix 420 after the shrinkage of the matrix 420. S1-S2 is an area of shrinkage of the matrix 420. The plane shrinkage rate of the matrix 420 represents the lithium release amount of each lithium supplement particle 400 during the lithium supplement process.

In some embodiments, the mass fraction of the lithium supplement particles 400 in the positive active layer 231 is *w*3, and the plane shrinkage rate is *α*, where 0.4 ≤ *α*×*w*3/*w*1 ≤ 0.85.

Specifically, the value of α×*w*3/*w* 1 may be, but is not limited to, 0.4, 0.42, 0.45, 0.48, 0.5, 0.52, 0.54, 0.56, 0.58, 0.59, 0.6, 0.63, 0.65, 0.68, 0.7, 0.72, 0.74, 0.76, 0.8, 0.82, 0.84, 0.85, etc.

It may be understood that, the mass fraction w3 of the lithium supplement particles 400 in the positive active layer 231 is a ratio of the mass of the lithium supplement particles 400 to the mass of the positive active layer 231.

It may be understood that, during the process of releasing lithium ions by the lithium supplement particles 400, the matrix 420 shrinks due to the deintercalation of lithium ions and the decrease in lithium content.

It may be understood that, the product of the plane shrinkage rate *α* of the matrix 420 and the mass fraction *w*3 of the lithium supplement particles 400 represents a total lithium release amount of the multiple lithium supplement particles 400 in the positive active layer 231. A larger value of *α*×*w*3 corresponds to a greater total lithium release amount of the multiple lithium supplement particles 400. A smaller value of *α*×*w*3 corresponds to a smaller total lithium release amount of the multiple lithium supplement particles 400.

In the embodiment, when the plane shrinkage rate *α* of the matrix 420, the mass fraction *w*3 of the lithium supplement particles 400, and the mass fraction *w*1 of the borate-based additive satisfy 0.4 ≤ *α*×*w*3/*w*1 ≤ 0.85, the total lithium release amount of the lithium supplement particles 400 and the mass fraction of the borate-based additive each are within a reasonable range. Also, the mass fraction of the lithium supplement particles 400 and the plane shrinkage rate of the matrix 420 each are within a reasonable range. When the lithium ion battery 200 is charged, the lithium supplement particles 400 can release sufficient lithium ions to replenish the lithium ions consumed during the charge-discharge cycles of the lithium ion battery 200, resulting in a high initial efficiency, energy density, and capacity retention rate of the lithium ion battery 200. In addition, the mass fraction of the borate-based additive is within a reasonable range, and the borate-based additive can be promptly combined with negative oxygen ions, so as to avoid generating a large amount of oxygen and avoid side reactions between the electrolyte 100 and oxygen. It can also prevent the interfacial impedance between the positive electrode 230/the negative electrode 210 and the electrolyte 100 from increasing due to excessive borate-based additive in the electrolyte, so that the lithium ion battery 200 has a high cycling performance, safety performance, and energy efficiency. When the value of α×*w*3/*w*1 is too large, the total lithium release amount of the lithium supplement particles 400 is much greater than the mass fraction of the borate-based additive. In other words, the total lithium release amount of the lithium supplement particles 400 is too large or the mass fraction of the borate-based additive is too small. During the charging process of the lithium ion battery 200, the lithium supplement particles 400 release a large amount of lithium ions to promptly replenish the consumed active ions in the electrolyte, so that the lithium ion battery 200 has a high available energy. But correspondingly, the lithium supplement particles 400 release a large amount of iron ions and negative oxygen ions while releasing lithium ions, and iron ions are combined with negative oxygen ions easily and oxidation reactions occur. In this case, the amount of oxygen generated in the lithium ion battery 200 is increased, and the possibility of side reactions between the electrolyte 100 and oxygen is increased, thereby consuming the electrolyte 100 and reducing the stability of the electrolyte 100. In addition, the interfacial impedance between the positive electrode 230/the negative electrode 210 and the electrolyte 100 is increased, and thus reducing the safety performance and energy efficiency of the lithium ion battery 200. When the value of *α*×*w*3/*w* 1 is too small, the total lithium release amount of the lithium supplement particles 400 is much smaller than the mass fraction of the borate-based additive. In other words, the total lithium release amount of the lithium supplement particles 400 is too small or the mass fraction of the borate-based additive is too large. In the lithium ion battery 200, boron atoms in the borate-based additive can be combined with negative oxygen ions released by the lithium supplement particles 400, so as to reduce the production of oxygen. In this way, it is beneficial for reducing the solubility of oxygen in the electrolyte 100 and reducing side reactions between oxygen and the electrolyte 100, thereby improving the safety performance of the lithium ion battery 200. But correspondingly, the mass fraction of the lithium supplement particles 400 is too small or the plane shrinkage rate *α* of the matrix 420 is too small. In this case, it is difficult for the lithium supplement particles 400 to replenish the lithium ions lost during the charge-discharge cycle of the lithium ion battery 200, so that the lithium ion battery 200 has a low initial efficiency and a low energy density. In addition, when the mass faction of the borate-based additive is too large, in the electrolyte 100, a portion of the borate-based additive may be combined with negative oxygen ions, while the redundant borate-based additive may adhere to the interface between the positive electrode 230 and/or the negative electrode 210 and the electrolyte 100. In this case, reduction reactions occur and the decomposition products are generated, which may increase the interfacial impedance, thereby slowing down the transmission speed and migration speed of active ions between the positive electrode 230/the negative electrode 210 and the electrolyte 100, resulting in a low energy efficiency of the lithium ion battery 200.

In some embodiments, the plane shrinkage rate *α* of the matrix 420 satisfies 5% ≤ *α* ≤ 40%.

Specifically, the value of *α* may be, but is not limited to, 5%, 8%, 9%, 10%, 12%, 14%, 15%, 16%, 18%, 20%, 22%, 24%, 25%, 27%, 29%, 30%, 31%, 34%, 35%, 37%, 38%, 39%, 40%, etc.

In the embodiment, when the lithium supplement particles 400 release lithium ions, the matrix 420 shrinks due to a decrease in lithium content. When the plane shrinkage rate *α* of the matrix 420 satisfies 5% ≤ *α* ≤ 40%, the value of the plane shrinkage rate *α* is within a reasonable range, that is, lithium ions released by the lithium supplement particles 400 are within a reasonable range. Lithium ions released by the lithium supplement particles 400 are added to the electrolyte 100, and are added to the negative electrode 210 through the electrolyte 100, so as to promptly replenish the active ions consumed during the charge-discharge cycle of the lithium ion battery 200, thereby improving the initial efficiency, energy density, and capacity retention rate of the lithium ion battery 200. When the plane shrinkage rate *α* of the matrix 420 is too large, the lithium supplement particles 400 release excessive lithium ions when the lithium ion battery 200 is charged, resulting in lithium-plating on parts of the negative electrode 210, thereby increasing the internal resistance of the lithium ion battery 200 and reducing the energy efficiency of the lithium ion battery 200. At the same time, the lithium supplement particles 400 release excessive negative oxygen ions and iron ions, which, upon combining, generate oxygen, leading to safety hazards and thus shortening the battery life of the lithium ion battery 200. When the plane shrinkage rate *α* of the matrix 420 is too small, it is difficult for the lithium supplement particles 400 to replenish the active ions consumed during the charge-discharge cycles of the lithium ion battery 200, thereby reducing the initial efficiency and the energy density of the lithium ion battery 200.

Preferably, the plane shrinkage rate *α* of the matrix 420 satisfies 10% ≤ *α* ≤ 30%. Specifically, the value of the plane shrinkage rate *α* may be, but is not limited to, 10%, 12%, 14%, 15%, 18%, 20%, 21%, 23%, 25%, 26%, 27%, 28%, 30%, etc.

In the embodiment, when the plane shrinkage rate *α* of the matrix 420 satisfies 10% ≤ *α* ≤ 30%, the plane shrinkage rate *α* is within a preferred range. When the lithium supplement particles 400 are applied to the lithium ion battery 200, lithium ions released by the lithium supplement particles 400 are added to the electrolyte 100, and are added to the negative electrode 210 through the electrolyte 100, so as to promptly replenish the active ions consumed during the charge-discharge cycle of the lithium ion battery 200, thereby improving the initial efficiency, energy density, and capacity retention rate of the lithium ion battery 200. In addition, excessive oxygen generated due to excessive lithium supplement particles 400 may be avoided, thereby reducing the possibility of side reactions between the electrolyte 100 and oxygen, so that the lithium ion battery 200 has a high cycling performance and a high safety performance.

Optionally, the coating layer 410 is a carbon coating layer. The coating layer 410 has conductivity and can protect the matrix 420 that is wrapped by the coating layer 410, so as to enhance the antioxidant performance of the lithium supplement particles 400.

In some embodiments, the lithium ion battery 200 satisfies 20 ≤ *α*/*w* 1 ≤ 100.

Specifically, the value of *α*/*w*1 may be, but is not limited to, 20, 22, 25, 28, 30, 32, 36, 38, 40, 42, 45, 48, 50, 52, 55, 58, 60, 62, 65, 68, 70, 75, 78, 80, 82, 85, 88, 90, 92, 95, 98, 100, etc.

In the lithium ion battery 200 provided in the embodiment, when the value of*α*/*w*1 satisfies 20 ≤ *α*/*w*1 ≤ 100, the plane shrinkage rate *α* of the matrix 420 and the mass fraction *w*1 of the borate-based additive are each within a reasonable range. On one hand, lithium ions released by the lithium supplement particles 400 are each within a reasonable range, so as to replenish the active ions consumed during the charge-discharge cycle of the lithium ion battery 200. On the other hand, the borate-based additive can be promptly combined with negative oxygen ions released by the lithium supplement particles 400, so as to reduce the production of oxygen, thereby reducing side reactions between the electrolyte 100 and oxygen. In this way, the lithium ion battery 200 has a high initial efficiency and a good cycling stability. When the value of *α*/*w*1 is too large, the plane shrinkage rate of the matrix 420 is too large, which means that there are excessive lithium ions released by the lithium supplement particles 400, resulting in lithium-plating on parts of the negative electrode 210. Also, oxygen released by the lithium supplement particles 400 is excessive, making it difficult for the first additive to stop side reactions between the electrolyte 100 and oxygen. In this case, the stability of the electrolyte 100 is reduced, thereby reducing the capacity retention rate of the battery 200. When the value of *α*/*w*1 is too small, the plane shrinkage rate of the matrix 420 is too small or the mass fraction of the first additive is too large, making it difficult for the lithium supplement particles 400 to replenish the lithium ions lost during the charge-discharge process of the battery 200. Further, the first additive may generate excessive acids during redox reaction, and the acids generated by the first additive may damage the interfacial film between the positive electrode 230 and/or the negative electrode 210 and the electrolyte 100. In this way, the stability of the interfacial film between the positive electrode 230 and/or the negative electrode 210 and the electrolyte 100 is reduced, and the internal resistance of the battery 200 is increased, thereby reducing the charge-discharge efficiency, the energy efficiency, and the safety performance of the battery 200 when the electrolyte 100 is applied to the battery 200.

In some embodiments, the mass fraction w3 of the lithium supplement particles 400 in the positive active layer 231 satisfies 0.5% ≤ *w*3 ≤ 5%.

Specifically, the value of *w*3 may be, but is not limited to, 0.5%, 0.6%, 0.8%, 0.9%, 1%, 1.2%, 1.4%, 1.6%, 1.8%, 2%, 2.1%, 2.3%, 2.4%, 2.5%, 2.7%, 2.8%, 2.9%, 3%, 3.2%, 3.4%, 3.6%, 3.8%, 4%, 4.2%, 4.3%, 4.5%, 4.6%, 4.7%, 4.8%, 4.9%, 5%, etc.

In the embodiment, when the mass fraction w3 of the lithium supplement particles 400 satisfies 0.5% ≤ *w*3 ≤ 5%, the mass fraction of the lithium supplement particles 400 is within a reasonable range. Lithium ions released by the lithium supplement particles 400 are added to the electrolyte 100, and are added to the negative electrode 210 through the electrolyte 100, so as to promptly replenish the active ions consumed during the charge-discharge cycle of the lithium ion battery 200, thereby improving the initial efficiency, energy density, and capacity retention rate of the lithium ion battery 200. When the mass fraction of the lithium supplement particles 400 is too large, the lithium supplement particles 400 release excessive lithium ions when the lithium battery 200 is charged, resulting in lithium-plating on parts of the negative electrode 210. At the same time, the lithium supplement particles 400 release excessive negative oxygen ions and iron ions, which, upon combining, generate oxygen, leading to safety hazards and thus shortening the battery life of the lithium ion battery 200. When the mass fraction of the lithium supplement particles 400 is too small, it is difficult for the lithium supplement particles 400 to replenish the active ions consumed during the charge-discharge cycles of the lithium ion battery 200, thereby reducing the initial efficiency and the energy density of the lithium ion battery 200.

In some embodiments, under a magnification of 5K and within a rectangular area of 22µm×15µm, multiple lithium supplement particles 400 are in a cross-section of the positive electrode 230. A sum of areas defined by inner contours of multiple coating layers 410 is *S*3, and after the lithium supplement particles 400 release lithium ions, a sum of areas defined by outer contours of multiple matrices 420 is *S*4, where a shrinkage area *S* of the multiple lithium supplement particles 400 during the lithium supplement process satisfies *S* = *S*3-*S*4, and *S* satisfies 1.5µm² ≤ S/*w* 1 ≤ 8µm².

Specifically, the value of *S*/*w*1 may be, but is not limited to, 1.5µm², 1,8µm², 2µm², 2.2µm², 2.5µm², 2.8µm², 3µm², 3.2µm², 3.5µm², 4µm², 4.5µm², 4.8µm², 5µm², 5.2µm², 5.6µm², 6µm², 6.5µm², 7µm², 7.5µm², 8µm², etc.

It may be understood that the rectangular area of 22µm×15µm refers to a rectangular area with a length of 22µm and a width of 15µm.

In the embodiment, under a specific magnification and in a specific area, a sum of areas *S*3 defined by inner contours of multiple coating layers 410 is a sum of areas of the matrices 420 of the multiple lithium supplement particles 400 before the shrinkage of the matrices 420, and a sum of areas *S*4 defined by outer contours of multiple matrices 420 is a sum of areas of the matrices 420 of the multiple lithium supplement particles 400 after the shrinkage of the matrices 420. A difference between *S*3 and *S*4 is the shrinkage area S of the multiple lithium supplement particles 400 during the lithium supplement process. When *S*/*w*1 satisfies 1.5µm² ≤ *S*/*w*1 ≤ 8µm², the value of *S*/*w*1 is within a reasonable range, and the amount of lithium ions released by the multiple lithium supplement particles 400 is within a reasonable range, so that the lithium supplement particles 400 can promptly replenish the lithium ions lost during the charge-discharge process of the lithium ion battery 200, thereby ensuring that the lithium ion battery 200 has a high initial efficiency, energy density, and capacity retention rate. In addition, the amount of borate-based additive is within a reasonable range, so that the borate-based additive can be promptly combined with the negative oxygen ions released by the lithium supplement particles 400 to avoid the generation of excessive oxygen and avoid side reactions between oxygen and the electrolyte 100. It may also prevent excessive borate-based additive from increasing the interfacial impedance between the positive electrode 230/negative electrode 210 and the electrolyte 100. In this way, the lithium ion battery 200 has a high cycling performance, safety performance, and energy efficiency. When the value of *S*/*w*1 is too large, the shrinkage area *S* of the multiple lithium supplement particles 400 during the lithium supplement process is too large or the mass fraction of the borate-based additive is too small. In this case, the lithium supplement particles 400 release excessive lithium ions when the lithium ion battery 200 is charged, resulting in lithium-plating on parts of the negative electrode 210, which increases the internal resistance of the battery 200 and reduces the energy efficiency of the lithium ion battery 200. At the same time, the lithium supplement particles 400 release excessive negative oxygen ions and iron ions, and the borate-based additive is only combined with a small portion of negative oxygen ions. In this case, the negative oxygen ions are combined with the iron ions to generate more oxygen, leading to safety hazards and thus shortening the battery life of the lithium ion battery 200. When the value of *S*/*w*1 is too small, the shrinkage area *S* of the multiple lithium supplement particles 400 during the lithium supplement process is too small or the mass fraction of the borate-based additive is too large. The lithium supplement particles 400 release insufficient lithium ions, making it difficult for the lithium supplement particles 400 to replenish the lithium ions lost during the charge-discharge cycles of the lithium ion battery 200, which reduces the initial efficiency and the energy density of the lithium ion battery 200. In addition, when the mass fraction of the borate-based additive is too large, a portion of the borate-based additive is combined with the negative oxygen ions in the electrolyte 100, and the redundant borate-based additive may adhere to the interface between the positive electrode 230 and/or the negative electrode 210 and the electrolyte 100. In this case, reduction reactions occur and decomposition products are generated, thereby increasing the interfacial impedance and slowing down the transmission speed and migration speed of active ions between the positive electrode 230/the negative electrode 210 and the electrolyte 100, resulting in a low energy efficiency of the lithium ion battery 200.

In some embodiments, the shrinkage area *S* of the multiple lithium supplement particles 400 during the lithium supplement process satisfies 0.1µm² ≤ *S* ≤ 6µm².

Specifically, the value of *S* may be, but is not limited to, 0.1µm², 0.5µm², 0.8µm², 1µm², 1.2µm², 1.5µm², 2µm², 2.2µm², 2.5µm² 3µm², 3.2µm², 3.5µm², 3.8µm², 4µm², 4.5µm², 4.8µm², 5µm², 5.2µm², 5.6µm², 5.8µm², 6µm², etc.

In the embodiment, when the shrinkage area *S* of the multiple lithium supplement particles 400 during the lithium supplement process satisfies 0.1µm² ≤ *S* ≤ 6µm², the amount of lithium ions released by the multiple lithium supplement particles 400 is within a reasonable range. These lithium ions are added to the electrolyte 100, and are added to the negative electrode 210 through the electrolyte 100, so that the active ions consumed during the charge-discharge cycles of the lithium ion battery 200 are promptly replenished, thereby improving the initial efficiency, energy density, and capacity retention rate of the lithium ion battery 200. When the shrinkage area *S* of the multiple lithium supplement particles 400 during the lithium supplement process is too large, the lithium supplement particles 400 release excessive lithium ions when the lithium ion battery 200 is charged, resulting in lithium-plating on parts of the negative electrode 210, which increases the internal resistance of the lithium ion battery 200 and reduces the energy efficiency of the lithium ion battery 200. At the same time, the lithium supplement particles 400 release excessive negative oxygen ions and iron ions, and the negative oxygen ions and the iron ions are combined with generate oxygen, leading to safety hazards and thus shortening the battery life of the lithium ion battery 200. When the shrinkage area *S* of the multiple lithium supplement particles 400 during the lithium supplement process is too small, the lithium supplement particles 400 release insufficient lithium ions during the lithium supplement process, making it difficult for the lithium supplement particles 400 to replenish the active ions lost during the charge-discharge cycles of the lithium ion battery 200, thereby reducing the initial efficiency and the energy density of the lithium ion battery 200.

The following examples will further explain the technical solution of the disclosure.

Examples 1 to 17 and comparative examples 1 to 8 are described in the following.

### 1. Preparation of the positive electrode 230.

A positive active material (for example, lithium iron phosphate), lithium supplement particles 400 (for example, a particle with Li₅FeO₄ as the matrix 420 and Al₂O₃@C as the coating layer 410, or a particle with Li₆CoO₄ as the matrix 420 and a carbon coating layer as the coating layer 410), a positive conductive agent (for example, conductive carbon black), and a positive binder (for example, polyvinylidene fluoride) are dispersed in a N-methylpyrrolidone (NMP) solvent and are well mixed to obtain a positive slurry. In the positive slurry, the mass fraction of the positive active material, the mass fraction of the positive conductive agent, and the mass fraction of the positive binder are at a ratio of 96%:0.5%:2.3%. The positive slurry is coated on the positive current collector layer 232 (for example, an aluminum foil) with a coating weight of 254mg per unit area (1540.25mm²) to form the positive active layer 231. After drying, cold-pressing, slitting, and cutting, positive electrodes 230 of examples 1 to 17 and comparative examples 1 to 8 are obtained. Lithium supplement particles 400 of examples 1 to 16 and comparative examples 1 to 8 have Li₅FeO₄ as matrices 420 and AL₂O₃@C as coating layers 410, and the lithium supplement particle 400 of example 17 has Li₆CoO₄ as the matrix 420 and a carbon coating layer as the coating layer 410. The values of the mass fraction w3 of the lithium supplement particles 400 of examples 1 to 17 and comparative examples 1 to 8, the plane shrinkage rate *α* of the matrix 420, and the shrinkage area *S* of the multiple lithium supplement particles 400 during the lithium supplement process are illustrated in table 1.

### 2. Preparation of the negative electrode 210 and the separator 220.

A negative active material (for example, artificial graphite), a negative conductive agent (for example, carbon black), a negative thickener (for example, carboxymethyl cellulose), and a negative binder (for example, styrene butadiene rubber) are dispersed at a mass ratio of 96.5:0.5:1:2 in deionized water and are mixed homogeneously to obtain a negative slurry. The negative slurry is coated on a negative current collector layer (for example, a copper foil) with a coating weight of 122mg per unit area (1540.25mm²). After drying, cold-pressing, slitting, and cutting, negative electrodes 210 of examples 1 to 17 and comparative examples 1 to 8 are obtained.

The separator 220 is a polyethylene separator with a thickness of 16µm.

### 3. Preparation of the electrolyte 100.

In a glove box under an argon atmosphere with a moisture content of ≤ 1ppm, ethylene carbonate, dimethyl carbonate, and methyl ethyl carbonate at a mass ratio of 1:1:1 are mixed, and then a dried electrolyte lithium salt, i.e., a lithium hexafluorophosphate is dissolved in the solvent and is stirred until completely dissolved. The borate-based additive, the sulfur-containing additive, and the film-forming additive are added to the solvent and are mixed homogeneously to obtain the electrolyte 100. The concentration of the lithium salt is 1mol/L, and the mass fraction of the film-forming additive in the electrolyte 100 is 3%. The types of the borate-based additive, the values of the mass fraction *w*1 of the borate-based additive, the types of the sulfur-containing additive, and the values of the mass fraction w2 of the sulfur-containing additive in the electrolyte 100 of examples 1 to 17 and comparative examples 1 to 8 are illustrated in table 1.

### 4. Assembly of the lithium ion battery 200.

The positive electrodes 230, the separators 220, and the negative electrodes 210 of examples 1 to 17 and comparative examples 1 to 8 are stacked in sequence. The separator 220 is positioned between the positive electrode 230 and the negative electrode 210, which are wound together to obtain a bare battery cell. The bare battery cell is placed in an outer package foil. After drying, the electrolyte 100 is injected, and example batteries 1 to 15 and comparative batteries 1 to 8 are obtained after processes such as standing, formation, packaging. The positive electrode 230 and the electrolyte 100 of example 1 are disposed in the example battery 1, the positive electrode 230 and the electrolyte 100 of example 2 are disposed in the example battery 2, and the positive electrode 230 and the electrolyte 100 of comparative example 1 are disposed in the comparative battery 1, and so on.

For the matrix 420 of the positive electrode 230, a testing method of the plane shrinkage rate *α* is as follows.

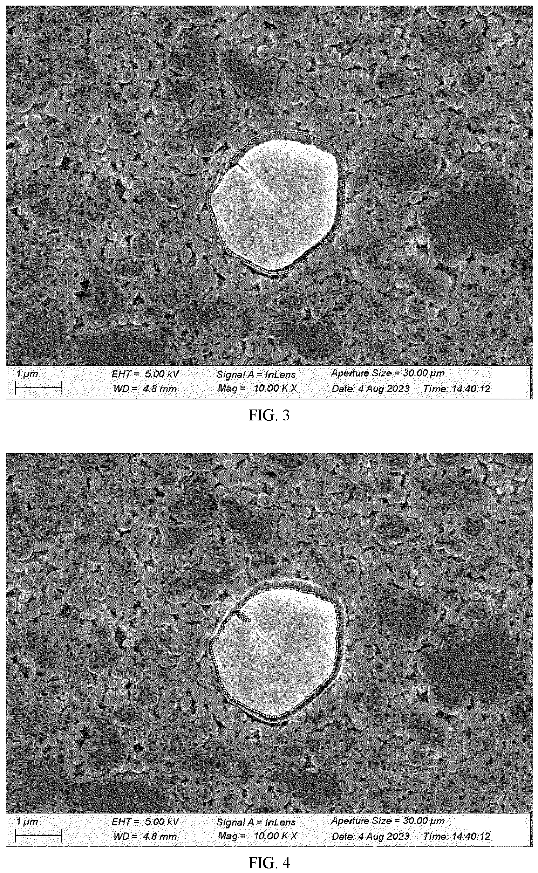

Reference is made to FIG. 3 and FIG. 4. The positive electrode 230 is applied to the lithium ion battery 200 and the lithium ion battery 200 is charged. The positive electrode 230 is disassembled by cutting the positive electrode 230 with an ion-beam CP to obtain a cross-section of the positive electrode 230. The positive electrode 230 is observed by a scanning electron microscope (SEM) and a picture of the positive electrode 230 is captured at a magnification of 10K. FIG. 3 is an SEM image of a lithium supplement particle 400 after shrinkage provided in an embodiment of the disclosure. FIG. 3 shows a situation where points on the inner contour of the coating layer 410 are selected. An image analysis software is used and a polygon measurement function is adopted to select points along the inner contour of the coating layer 410. An area *S*1 defined by the inner contour of the coating layer 410 is calculated using the image analysis software, and the area defined by the inner contour of the coating layer 410 is the area of the matrix 420 before shrinkage. FIG. 4 is an SEM image of a lithium supplement particle 400 after shrinkage provided in another embodiment of the disclosure. FIG. 4 shows a situation where points on the outer contour of the matrix 420 are selected. Points are selected along the outer contour of the matrix 420. An area *S*2 defined by the outer contour of the matrix 420 is calculated using the image analysis software, which is the area of the matrix 420 after shrinkage. The plane shrinkage rate *α* of the matrix 420 satisfies *α =* (*S*1*-S*2)/*S*1 ×100%. By controlling the maximum charging voltage of the lithium-ion battery 200 during formation, the plane shrinkage rate *α* of the matrix 420 is controlled.

For the multiple matrices 420 of the positive electrode 230, a testing method of a shrinkage area S during the lithium supplement process is as follows.

The positive electrode 230 is applied to the lithium ion battery 200 and the lithium ion battery 200 is charged. The positive electrode 230 is disassembled by cutting the positive electrode 230 with an ion-beam CP to obtain a cross-section of the positive electrode 230. The positive electrode 230 is observed by a SEM and a picture of the positive electrode 230 is captured at a magnification of 5K. In a rectangular area of 22µm×15µm, a sum of areas defined by inner contours of the multiple coating layers 410 is *S*3, which is a sum of areas of the multiple lithium supplement particles 400 before shrinkage. A sum of areas defined by outer contours of the multiple matrices 420 is *S*4, which is a sum of areas of the multiple lithium supplement particles 400 after shrinkage. The shrinkage area *S* of the multiple matrices 420 during the lithium supplement process satisfies *S* = *S*3-*S*4.

Table 1 below shows the structural parameters of the electrolytes 100 and the lithium ion batteries 200 of examples 1 to 17 and comparative examples 1 to 8.

**Table 1: structural parameters of the electrolytes 100 and the lithium ion batteries 200 of examples 1 to 17 and comparative examples 1 to 8**

| | Plane shrinkage rate a of the matrix (%) | Mass fraction *w*3 of the prelithiation particles (%) | Shrinkage area *S* of the prelithiation particles during prelithiation (µm²) | Types of the borate-based additive | Mass fraction *w*1 of the borate-based additive (%) | Types of the sulfur-containing additive | Mass fraction *w* 2 of the sulfur-containing additive(%) | *w*2/*w*1 | *S*/*w*1 (µm²/%) | *α* × *w* 3/*w*1 |
|---|---|---|---|---|---|---|---|---|---|---|
| Example 1 | 12 | 2.5 | 1.2 | lithium tetrafluoroborate | 0.40 | Ethylene sulfate | 0.50 | 1.25 | 3 | 0.75 |
| Example 2 | 12 | 3 | 1.5 | Lithium tetrafluoroborate | 0.50 | Ethylene sulfate | 0.50 | 1.00 | 3 | 0.72 |
| Example 3 | 12 | 3.5 | 1.8 | Lithium tetrafluoroborate | 0.60 | Ethylene sulfate | 0.50 | 0.83 | 3 | 0.70 |
| Example 4 | 20 | 2.5 | 2.3 | Lithium tetrafiuoroborate | 0.60 | Ethylene sulfate | 0.50 | 0.83 | 3.83 | 0.83 |
| Example 5 | 20 | 2.5 | 2.3 | Lithium tetrafluoroborate | 0.80 | Ethylene sulfate | 0.50 | 0.63 | 2.88 | 0.63 |
| Example 6 | 20 | 1.5 | 2.3 | Lithium tetrafluoroborate | 1.00 | Ethylene sulfate | 0.80 | 0.80 | 2.3 | 0.50 |
| Example 7 | 20 | 2.5 | 2.3 | lithium tetrafluoroborate | 1.00 | Ethylene sulfate | 1.20 | 1.20 | z.s | 0.50 |
| Example S | 20 | 2.5 | 2.3 | lithium tetrafluoroborate | 1.00 | Ethylene sulfate | 1.40 | 1.40 | 2.3 | 0.50 |
| Example 9 | 20 | 2.5 | 2.3 | Lithium difluoro(oxalato) borate | 1.00 | Ethylene sulfate | 1.20 | 1.20 | 2.3 | 0.50 |
| Example 10 | 20 | 2.5 | 2.3 | lithium difluoro(oxalato) borate | 1.20 | Ethylene sulfate | 1.4 | 1.17 | 1.92 | 0.42 |
| Example 11 | 20 | 2.5 | 2.3 | Lithium dicyanooxlatobor ate | 1.00 | Ethylene sulfate | 1.20 | 1.20 | 2.3 | 0.50 |
| Example 12 | 20 | 2.5 | 2.3 | Lithium difluoro(oxalato)borate | 1.00 | 1,3-propenesul tone | 120 | 1.20 | 2.3 | 0.50 |
| Example 13 | 20 | 2.5 | 2.3 | Lithium difluoro(oxalato) borate | 1.00 | 1,4-butenesult one | 1.20 | 1.20 | 2.3 | 0.50 |
| Example 14 | 28 | 2.5 | 3.0 | Lithium di2luoro(oxateto) borate | 1.40 | Ethylene sulfate | 120 | 1.00 | 2.14 | 0.50 |
| Example 15 | 28 | 2.5 | 3.0 | lithium difluoro(oxalato) borate | 0.40 | Ethylene sulfate | 1.50 | 1.07 | 7.5 | 0.50 |
| Example 16 | 38 | 2,5 | 4.0 | Lithium difluoro(oxalato) borate | 1.40 | Ethylene sulfate | 1.20 | 0.86 | 2.86 | 0.68 |
| Example 17 | 20 | 2.5 | 2.3 | Lithium difluoro(oxalato) borate | 1.00 | Ethylene sulfate | 1.20 | 1.20 | 2.3 | 0.50 |
| Comparative example 1 | 2 | 2.5 | 0.2 | lithium tetrafluoroborate | 0.40 | Ethylene sulfate | 0.50 | 1.25 | 0.5 | 0.13 |
| Comparative example 2 | 38 | 2.5 | 4.0 | Lithium tetrafluoroborate | 0.40 | Ethylene sulfate | 0.50 | 1.25 | 10 | 2.38 |
| Comparative example 3 | 20 | 2.5 | 2.3 | Lithium difluoro(oxalato) borate | 2.50 | Ethylene sulfate | 1.20 | 0.48 | 0.92 | 0.20 |
| Comparative example 4 | 20 | 2.5 | 2.3 | Lithium difluoro(oxalato) borate | 0.00 | Ethylene sulfate | 1.20 | / | / | / |
| Comparative example 5 | 20 | 2.5 | 2.3 | Lithium difluoro(oxalato) borate | 1.00 | Ethylene sulfate | 2.80 | 2.80 | 2.3 | 0.50 |
| Comparative example 6 | 20 | 2.5 | 2.3 | Lithium difluoro(oxalato) borate | 1.00 | Ethylene sulfate | 0.00 | / | 2.3 | 0.50 |
| Comparative example 7 | 12 | 3.5 | 1.8 | Lithium tetrafluoroborate | 0.20 | Ethylene sulfate | 0.50 | 2.50 | 9 | 2.10 |
| Comparative example 8 | 12 | 4.5 | 2.3 | Lithium tetrafluoroborate | 0.20 | Ethylene sulfate | 0.500 | 2.50 | 11.5 | 2.70 |

Performance test for the lithium ion battery 200 is as follows.

Let example batteries 1 to 17 and comparative batteries 1 to 8 stand at 25°C for 1 hour, and these batteries are charged to 3.65V at 0.5P and then discharged to 2.5V at 0.5P. An initial discharge capacity *C*1 and an initial discharge energy *E*1 of the lithium ion battery 200 are recorded. The example batteries 1 to 17 and comparative batteries 1 to 8 are charged and discharged for 500 cycles. A discharge capacity *C*₅₀₀, charge capacity *C*_{'500}, discharge energy *E*₅₀₀, and charge energy *E*_{*'*500} are recorded to obtain the energy efficiency *E*=*E*₅₀₀/*E*_{'500}×100% of the example batteries 1 to 17 and comparative batteries 1 to 8 after 500 cycles, and obtain a capacity retention rate *Cf=C*₅₀₀/*C*₁×100% of the example batteries 1 to 17 and comparative batteries 1 to 8 after 500 cycles. The energy efficiency *E* and capacity retention *Cf* of the example batteries 1 to 17 and comparative batteries 1 to 8 after 500 cycles are illustrated in table 2.

Table 2 below shows the performance parameters of example batteries 1 to 17 and comparative batteries 1 to 8.

**Table 2: performance parameters of example batteries 1 to 17 and comparative batteries 1 to 8**

| Example batteries and comparative batteries | Energy efficiency *E* after 500 cycles (%) | Capacity retention rate *Cf* after 500 cycles (%) |
|---|---|---|
| Example battery 1 | 96.40 | 97.90 |
| Example battery 2 | 96.18 | 98.20 |
| Example battery 3 | 96.03 | 98.45 |
| Example battery 4 | 96.00 | 98.48 |
| Example battery 5 | 95.89 | 98.32 |
| Example battery 6 | 95.76 | 98.50 |
| Example battery 7 | 96.32 | 98.50 |
| Example battery 8 | 96.28 | 98.43 |
| Example battery 9 | 96.49 | 98.51 |
| Example battery 10 | 96.39 | 98.48 |
| Example battery 11 | 96.20 | 98.46 |
| Example battery 12 | 96.10 | 98.50 |
| Example battery 13 | 95.86 | 98.50 |
| Example battery 14 | 96.05 | 98.46 |
| Example battery 15 | 96.89 | 98.26 |
| Example battery 16 | 93.89 | 98.18 |
| Example battery 17 | 96.36 | 97.89 |
| Comparative battery 1 | 96.34 | 94.2 |
| Comparative battery 2 | 95.12 | 93.1 |
| Comparative battery 3 | 93.2 | 95.6 |
| Comparative battery 4 | 96.12 | 92.8 |
| Comparative battery 5 | 93.27 | 95.32 |
| Comparative battery 6 | 94.06 | 95.01 |
| Comparative battery 7 | 94.76 | 94.3 |
| Comparative battery 8 | 95.68 | 93.9 |

Reference is made to table 1 and table 2. In examples 1 to 3, values of the mass fraction *w*3 of the lithium supplement particles 400, the shrinkage area *S* of the multiple lithium supplement particles 400 during the lithium supplement process, the mass fraction *w*1 of the borate-based additive, the mass fraction *w*2 of the sulfur-containing additive, and *S*/*w*1 are each within a reasonable range. However, in examples 1 to 3, the ratios of the mass fraction *w*2 of the sulfur-containing additive to the mass fraction *w*1 of the borate-based additive decrease in order, and the value of *w*2/*w*1 in example 1 is greater than 1.2. In examples 1 to 3, values of the shrinkage area *S* of the multiple lithium supplement particles 400 during the lithium supplement process increase in order. The energy efficiencies after 500 cycles decrease in order from the example battery 1 to the example battery 3, but the capacity retention rates after 500 cycles increase in order from the example battery 1 to the example battery 3. In other words, the cycling performances improve in order from the example battery 1 to the example battery 3. Reasons are as follows. When the mass fraction *w*2 of the sulfur-containing additive is far greater than the mass fraction of the borate-based additive, although the sulfur-containing additive can offset the increase of the interfacial impedance caused by the addition of the borate-based additive, the excessive amount of the sulfur-containing additive may result in that the sulfur-containing additive is easily hydrolyzed in the electrolyte 100 and produce acids, thus damaging the interfacial film between the positive electrode 230/the negative electrode 210 and the electrolyte 100. In this case, the cycling performance of the lithium ion battery 200 may be reduced. In addition, in examples 1 to 3, the shrinkage area *S* of the multiple lithium supplement particles 400 during the lithium supplement process increases in order, and negative oxygen ions and iron ions released by the multiple lithium supplement particles 400 increase. The content of the borate-based additive is insufficient, in the lithium ion battery 200, the boron atoms of the borate-based additive can only be combined with a small portion of negative oxygen ions. In this case, oxidation reactions between iron ions and most of the negative oxygen ions released by the lithium supplement particles 400 occur, and oxygen is generated, thereby accelerating side reactions between oxygen and the electrolyte 100, and reducing the stability of the electrolyte 100. As a result, the energy efficiency of the lithium ion battery 200 is reduced when the electrolyte 100 is applied to the lithium ion battery 200. Therefore, the cycling performance of the example battery 2 and the cycling performance of the example battery 3 are both better than the cycling performance of the example battery 1.

In examples 4 to 6, values of the plane shrinkage rate *α* of the matrix 420, the mass fraction w3 of the lithium supplement particles 400, and the shrinkage area *S* of the multiple lithium supplement particles 400 during the lithium supplement process are constant. Values of the mass fraction *w*1 of the borate-based additive increase in order, and values of *α*×*w*3/*w*1 decrease in order. The energy efficiencies after 500 cycles decrease in order from the example battery 4 to the example battery 6, and the capacity retention rates after 500 cycles decrease and then increase from the example battery 4 to the example battery 6. Reasons are as follows. When the lithium release amount of the lithium supplement particles 400 is constant, as the mass fraction of the borate-based additive gradually increases, the borate-based additive may be better combined with negative oxygen ions released by the lithium supplement particles 400, thereby preventing the reduce in the stability of the electrolyte 100 due to reactions between oxygen and the electrolyte 100. However, the increase of the borate-based additive may increase the interfacial impedance between the electrolyte 100 and the positive electrode 230/the negative electrode 210, thereby reducing the cycling performance of the lithium-ion battery 200. Compared with the example battery 4, the cycling performance of the example battery 5 is poorer. Further, the mass fraction of the sulfur-containing additive in the electrolyte 100 of the example battery 6 is greater than the mass fraction of the sulfur-containing additive in the electrolyte 100 of the example battery 5. Therefore, the sulfur-containing additive in the electrolyte 100 of the example battery 6 can offset the increase of interfacial impedance caused by the borate-based additive, thereby improving the cycling performance of the example battery 6.

In examples 6 to 8, other parameters are the same, and as the mass fraction w2 of the sulfur-containing additive increases, the value of *w*2/*w*1 increases. In example 8, the value of *w*2/*w*1 is greater than 1.2, and the capacity retention rate after 500 cycles of the example battery 8 is lower than the capacity retention rate after 500 cycles of the example battery 6 and the example battery 7. Reasons are as follows. As the mass fraction of the sulfur-containing additive increases, the sulfur-containing additive in the electrolyte 100 is more prone to hydrolysis and generates acids. As a result, the interfacial film between the positive electrode 230/the negative electrode 210 and the electrolyte 100 may be damaged, which in turn reduces the cycling performance of the lithium ion battery 200.

In example 9 and example 10, the values of *w*2/*w*1 and *α*×*w*3/*w*1 in example 9 are greater, which makes the energy efficiency of the example battery 9 better than the energy efficiency of the example battery 10, and the capacity retention rate of the example battery 9 better than the capacity retention rate of the example battery 10. Reasons are as follows. On one hand, the borate-based additive can be combined with negative oxygen ions released by the lithium supplement particles 400, so as to slow down the generation of oxygen and slow down side reactions between oxygen and the electrolyte 100, thereby improving the stability of the electrolyte 100. On the other hand, the sulfur-containing additive can offset the increase of impedance caused by the borate-based additive. Moreover, the mass fraction of the sulfur-containing additive will not be too large, so that a situation where the sulfur-containing additive is hydrolyzed and produces acids may be avoided, and the damage to the interfacial film between the positive electrode 230/the negative electrode 210 and the electrolyte 100 of the example battery 9 may be avoided. Therefore, compared with the example battery 10, the example battery 9 has a better energy efficiency and better capacity retention rate.

In example 9 and example 11, other parameters are the same, and the borate-based additive of example 9 is lithium difluoro(oxalato)borate and the borate-based additive of example 11 is lithium dicyanooxlatoborate. The energy efficiency of the example battery 9 is better than the energy efficiency of the example battery 11, and the capacity retention rate of the example battery 9 is better than the capacity retention rate of the example battery 11. That is, compared with lithium dicyanooxlatoborate, lithium difluoro(oxalato)borate has better performance in terms of combing with negative oxygen ions of the lithium supplement particles 400.

In example 12 and example 13, other parameters are the same, and the sulfur-containing additive of example 12 is 1,3-propenesultone and the sulfur-containing additive of example 13 is 1,4-butenesultone. The energy efficiency of the example battery 12 is better than the energy efficiency of the example battery 13. That is, compared with 1,4-butenesultone, 1,3-propenesultone has better performance in terms of forming a sulfur-containing interfacial film to offset the increase of interfacial impedance caused by the borate-based additive.

In examples 14 to 16, the plane shrinkage rate of the matrix 420 in example 16 is far greater than the plane shrinkage rates of the matrix 420 in example 14 and example 15, which makes the energy efficiency after 500 cycles of the example battery 16 lower than the energy efficiencies after 500 cycles of the example batteries 14 and 15. Reasons are as follows. When the example battery 16 is charged, the lithium supplement particles 400 release excessive lithium ions, resulting in lithium-plating on parts of the negative electrode 210. At the same time, the lithium supplement particles 400 release excessive negative oxygen ions and iron ions, which, upon combining, generate oxygen, leading to safety hazards and increasing the internal resistance of the example battery 16. Therefore, the energy efficiency of the example battery 16 is lower than the energy efficiency of the example battery 14 and the energy efficiency of the example battery 15.

In example 9 and example 17, the electrolytes 100 and the structural parameters of the lithium ion battery 200 in example 9 and example 17 are the same, but the materials of the lithium supplement particles 400 in example 9 and example 17 are different. The lithium supplement particle 400 in example 9 has Li₅FeO₄ as the matrix 420, and the chemical formula of the coating layer 410 is Al₂O₃@C. The lithium supplement particle 400 in example 17 has Li₆CoO₄ as the matrix 420, and the coating layer 410 is a carbon coating layer. It can be seen from the data in table 2 that both the example battery 9 and the example battery 17 have a high energy efficiency after 500 cycles and a high capacity retention rate after 500 cycles. That is, these two types of lithium supplement particles 400 applied to the lithium ion battery 200 both have a good lithium supplement effect, and the borate-based additive can cooperate with the lithium supplement particles 400 of different materials to maintain the cycling performance of the lithium ion battery 200.

In comparative example 1 and comparative example 2, the plane shrinkage rage *α* of the matrix 420 of comparative example 1 is much smaller than the plane shrinkage rage *α* of the matrix 420 of comparative example 2, and the shrinkage area *S* of the multiple lithium supplement particles 400 during the lithium supplement process of comparative example 1 is much smaller than the shrinkage area *S* of the multiple lithium supplement particles 400 during the lithium supplement process of comparative example 2. Furthermore, the value of α×*w*3/*w*1 in comparative example 1 is less than 0.2, and the value of α×*w*3/*w*1 in comparative example 2 is greater than 0.6, which makes the energy efficiency of the comparative battery 1 higher than the energy efficiency of the comparative battery 2, and the capacity retention rate of the comparative battery 1 lower than the capacity retention rate of the comparative battery 2. Reasons are as follows. The lithium release amount of the lithium supplement particles 400 in the comparative battery 1 is insufficient, and in the electrolyte 100, the mass content of the borate-based additive is excessive. In the electrolyte 100, a portion of the borate-based additive is combined with negative oxygen ions, and redundant borate-based additive may adhere to the interface between the positive electrode 230 and/or the negative electrode 210 and the electrolyte 100. In this case, reduction reactions occur and the decomposition products are generated, which increases the interfacial impedance, thereby slowing down the transmission speed and migration speed of active ions between the positive electrode 230/the negative electrode 210 and the electrolyte 100, resulting in a low energy efficiency of the comparative battery 1. In the comparative battery 2, the plane shrinkage rate *α* of the matrix 420 is large, and the value of α×*w*3/*w*1 is too large. The lithium supplement particles 400 release a large amount of negative oxygen ions while releasing lithium ions, and oxygen is generated. In this case, side reactions between the electrolyte 100 and oxygen occur, thereby reducing the stability of the electrolyte 100 and increasing the interfacial impedance between the electrolyte 100 and the positive electrode 203/the negative electrode 210. Therefore, the comparative battery 2 has a low energy efficiency.

In comparative example 3 and comparative example 4, the mass fraction *w*1 of the borate-based additive in comparative example 3 is greater than 2%. In other words, the mass fraction *w*1 of the borate-based additive in comparative example 3 is too large, and the mass fraction *w*1 of the borate-based additive in comparative example 4 is 0, which makes the energy efficiency of the comparative battery 3 lower than the energy efficiency of the comparative battery 4, and the capacity retention rate of the comparative battery 3 higher than the capacity retention rate of the comparative battery 4. Reasons are as follow. The mass fraction *w*1 of the borate-based additive in the electrolyte 100 of the comparative battery 3 is too large, excessive borate-based additive may adhere to the interface between the positive electrode 230 and the electrolyte 100 or the interface between the negative electrode 210 and the electrolyte 100. In this case, reduction reactions occur and the generated decomposition products adhere to the positive electrode 230 and/or the negative electrode 210, which may increase the interfacial impedance, thereby slowing down the transmission speed and migration speed of active ions between the positive electrode 230/the negative electrode 210 and the electrolyte 100, resulting in a low energy efficiency of the comparative battery 3. In the comparative battery 4, although the energy efficiency of the comparative battery 4 is ensured, the lithium supplement particles 400 release oxygen while releasing lithium ions, thereby increasing the possibility of side reactions between the electrolyte 100 and oxygen and reducing the stability of the electrolyte 100, so that the comparative battery 4 has a low capacity retention rate.

In comparative example 5 and comparative example 6, the mass fraction *w*2 of the sulfur-containing additive in comparative example 5 is greater than 2%, which means the mass fraction *w*2 of the sulfur-containing additive in comparative example 5 is too large. The mass fraction *w*2 of the sulfur-containing additive in comparative example 6 is 0. Therefore, the energy efficiency of the comparative battery 5 is better than the energy efficiency of the comparative battery 6, and the capacity retention rate of the comparative battery 5 is smaller than the capacity retention rate of the comparative battery 6. Reasons are as follows. The excessive amount of the sulfur-containing additive in the comparative battery 5 may result in that the sulfur-containing additive is easily hydrolyzed in the electrolyte 100 and produce acids, thus damaging the interfacial film between the positive electrode 230/the negative electrode 210 and the electrolyte 100. In this case, the stability of the electrolyte 100 is reduced, so that the comparative battery 5 has a low capacity retention rate. In the comparative battery 6, the electrolyte 100 does not contain sulfur-containing additive, so that the increase of the interfacial impedance caused by the addition of the borate-based additive in the electrolyte 100 cannot be solved, resulting in that the comparative battery 6 has a low energy efficiency.

In comparative example 7 and comparative example 8, the mass fraction *w*3 of the lithium supplement particles 400 in example 8 is greater than the mass fraction *w*3 of the lithium supplement particles 400 in example 7, and the mass fraction *w*3 of the lithium supplement particles 400 in example 8 is greater than 3%. The values of *w*2/*w*1 in example 7 and example 8 are both greater than 1.2, and the values of α×*w*3/*w* 1 in example 7 and example 8 are both greater than 0.6. Compared with the capacity retention rates of the comparative battery 2 and comparative battery 3, the capacity retention rates of the comparative battery 7 and comparative battery 8 are too small. Reasons are as follows. When the value of α×*w*3/*w*1 is too large, the total lithium release amount of the lithium supplement particles 400 is much greater than the mass fraction of the borate-based additive. The lithium supplement particles 400 release a large amount of iron ions and negative oxygen ions while releasing lithium ions, and it is difficult for the borate-based additive to suppress the generation of oxygen, which accelerates side reactions between the electrolyte 100 and oxygen, thereby reducing the stability of the electrolytes 100 in the comparative battery 7 and comparative battery 8 and reducing capacity retention rates of the comparative battery 7 and comparative battery8. Further, in the electrolyte 100, when the mass fraction *w*2 of the sulfur-containing additive is far greater than the mass fraction of the borate-based additive, although the sulfur-containing additive can offset the increase of the interfacial impedance caused by the addition of the borate-based additive, the excessive amount of the sulfur-containing additive may result in that the sulfur-containing additive is easily hydrolyzed in the electrolyte 100 and produce acids, thus damaging the interfacial film between the positive electrode 230/the negative electrode 210 and the electrolyte 100. In this case, the stability of the electrolyte 100 is reduced, so that the capacity retention rates of the comparative battery 7 and comparative battery 8 is low.

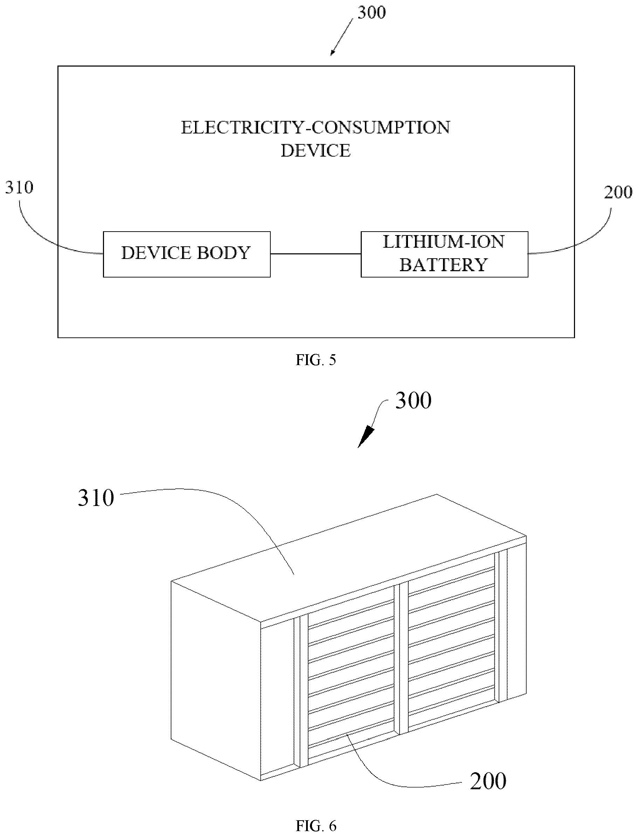

Reference is made to FIG. 5 and FIG. 6. Embodiments of the disclosure also provide an electricity-consumption device 300, which includes: a device body 310 and the lithium ion battery 200 provided in the disclosure. The lithium ion battery 200 is configured to supply power to the device body 310.

It may be understood that the lithium ion battery 200 is electrically connected to the device body 310.

In this embodiment, the lithium ion battery 200 has a good initial efficiency, cycling performance, and safety performance, resulting in a long battery life of the lithium ion battery 200. When the lithium ion battery 200 is used to power the device body 310, the lithium ion battery 200 can provide a stable power supply to the device body 310, ensuring the normal operation of the device body 310.

Optionally, the electricity-consumption device 300 in embodiments of the disclosure may be, but is not limited to, a cell phone, a tablet computer, a laptop, a desktop computer, a smart bracelet, a smart watch, an e-reader, a game console, and other portable electronic devices. It may also be an automobile, a truck, a sedan, a van, a freight car, a train, a high-speed train, an electric automatic vehicle, and other transportation tools. In addition, it may be various household appliances. In the disclosure, the electricity-consumption device 300 in the embodiment of FIG. 6 is an energy storage battery cabinet.

It may be understood that, the electricity-consumption device 300 is merely a form of the electricity-consumption device 300 to which the lithium ion battery 200 is applied, and should not be understood as limitation to the electricity-consumption device 300 provided in the disclosure, nor should be understood as limitation to the electricity-consumption device 300 provided in various embodiments of the disclosure.

Reference terms "embodiment" and "implementation" referred to herein mean that particular features, structures, or characteristics described in conjunction with embodiments may be contained in at least one embodiment of the disclosure. The phrase appearing in various places in the specification does not necessarily refer to the same embodiment, a separate embodiment that is mutually exclusive with other embodiments, or an alternative embodiment. It is both explicitly and implicitly understood by those of ordinary skill in the art that the embodiments described in the specification may be combined with other embodiments. In addition, it may also be understood that the features, structures, or characteristics described in embodiments of the disclosure, without contradicting each other, can be combined at will to form yet another embodiment that does not depart from the spirit and scope of the technical solution of the disclosure.

Finally, it should be noted that the above embodiments are used only to illustrate the technical solutions of the disclosure and not to limit it. Although the disclosure is described in detail with reference to the above optimal embodiments, it should be understood by those of ordinary skill in the art that modifications or equivalent substitutions can be made to the technical solutions of the disclosure without departing from the spirit and scope of the technical solutions of the disclosure.

## Claims

1. An electrolyte (100), comprising a borate-based additive, and a mass fraction *w*1 of the borate-based additive in the electrolyte (100) satisfies 0.01% ≤ *w*1 ≤ 2%.

2. The electrolyte (100) of claim 1, further comprising a sulfur-containing additive, wherein a mass fraction w2 of the sulfur-containing additive in the electrolyte (100) satisfies 0.01% ≤ *w*2 ≤ 2%.

3. The electrolyte (100) of claim 2, wherein in the electrolyte (100), a ratio of the mass fraction w2 of the sulfur-containing additive to the mass fraction *w*1 of the borate-based additive satisfies 0.5 ≤ *w*2/*w*1 ≤ 1.2.

4. The electrolyte (100) of claim 1, wherein the borate-based additive is selected from a group consisting of lithium difluoro(oxalato)borate, lithium bis(oxalate)borate, lithium Tetrafluoroborate, lithium tetraborate, lithium tetracyanoborate, lithium difluoro(oxalato)borate, lithium tetrakis(trifluoromethyl)borate, lithium difluorobis(trifluoromethyl)borate, lithium dicyanooxlatoborate, lithium pentafluoroethyltrifluoroborate, lithium perfluoro-tert-butoxy trifluoroborate, and any combination thereof.

5. The electrolyte (100) of claim 2, wherein the sulfur-containing additive is selected from a group consisting of 1,3-propanesultone, ethylene sulfate, 1,3-propenesultone, 1,4-butanesultone, 1,4-butenesultone, methylene methanedisulfonate, pentaerythritol bicyclic sulfate, and any combination thereof.

6. A lithium ion battery (200), comprising:
a negative electrode (210);
a separator (220) disposed on one side of the negative electrode (210);
a positive electrode (230) disposed on one side of the separator (220) facing away from the negative electrode (210), wherein the positive electrode (230) comprises a positive active layer (231) and a positive current collector layer (232), the positive active layer (231) is disposed on a surface of the positive current collector layer (232), and the positive active layer (231) comprises a plurality of lithium supplement particles (400); and
the electrolyte (100) of any one of claims 1 to 5, wherein at least part of the positive electrode (230) and at least part of the negative electrode (210) are immersed in the electrolyte (100).

7. The lithium ion battery (200) of claim 6, wherein a mass fraction of the lithium supplement particles (400) in the positive active layer (231) is *w*3, the lithium supplement particle (400) comprises a matrix (420) and a coating layer (410), the coating layer (410) is disposed on an outer surface of the matrix (420), a plane shrinkage rate *α* of the matrix (420) satisfies 0.4 ≤ *α×w*3/*w*1 ≤ 0.85; wherein a chemical formula of the matrix (420) is Li₁₊ᵣM₁₋ₚNₚO₄₋ₛBₛ, with r satisfying 0.1 < r < 6.1, p satisfying 0 ≤ p < 0.99, and s satisfying 0 ≤ s < 0.1; wherein M and N each are selected from a group consisting of iron, cobalt, nickel, titanium, zinc, magnesium, aluminum, manganese, vanadium, chromium, zirconium, copper, niobium, tantalum, tungsten, yttrium, lanthanum, and any combination thereof, and B is selected from a group consisting of sulfur, nitrogen, fluorine, chlorine, bromine, and any combination thereof.

8. The lithium ion battery (200) of claim 7, wherein an area defined by an inner contour of the coating layer (410) in a cross-section of the positive electrode (230) is *S*1, and after the lithium supplement particles (400) release lithium ions, an area defined by an outer contour of the matrix (420) is *S*2, wherein the plane shrinkage rate *α* of the matrix (420) satisfies *α =* (*S*1-*S*2)/*S*1×100%, and the plane shrinkage rate *α* of the matrix (420) satisfies 5% ≤ *α* ≤ 40%.

9. The lithium ion battery (200) of claim 7, wherein the lithium ion battery (200) satisfies 20 ≤ *α*/*w*1 ≤ 100.

10. The lithium ion battery (200) of claim 7, wherein the mass fraction *w*3 of the lithium supplement particles (400) in the positive active layer (231) satisfies 0.5% ≤ *w*3 ≤ 5%.

11. The lithium ion battery (200) of claim 7, wherein a plurality of lithium supplement particles (400) are in a cross-section of the positive electrode (230) under a 5K magnification and within a rectangular area of 22µm×15µm; a sum of areas defined by inner contours of a plurality of coating layers (410) is *S*3, and after the lithium supplement particles (400) release lithium ions, a sum of areas defined by outer contours of a plurality of matrices (420) is *S*4, wherein a shrinkage area *S* of the plurality of lithium supplement particles (400) during a lithium supplement process satisfies *S* = *S*3-*S*4, and S satisfies 1.5µm² ≤ *S*/*w*1 ≤ 8µm².

12. The lithium ion battery (200) of claim 11, wherein the shrinkage area *S* of the plurality of lithium supplement particles (400) during the lithium supplement process satisfies 0.1µm² ≤ *S* ≤ 6µm².

13. An electricity-consumption device (300), comprising:
a device body (310); and
the lithium ion battery (200) of any one of claims 6 to 12, wherein the battery (200) is configured to supply power to the device body (310).
